# EUROPÄISCHE PATENTSCHRIFT

(11) **EP 3 475 057 B1**
(45) Veröffentlichungstag und Bekanntmachung des Hinweises auf die Patenterteilung: **26.08.2020**
(21) Anmeldenummer: 18731020.6
(22) Anmeldetag: 06.06.2018
(51) Int. Cl.: B29C 64/35, B29C 64/153, B22C 7/00, B22F 3/105, B33Y 40/00, B29C 64/205, B33Y 30/00, B33Y 10/00, B08B 1/00

(54) **3D-DRUCKER MIT BESCHICHTER UND BESCHICHTER-REINIGUNGSVORRICHTUNG UND VERFAHREN ZUM REINIGEN EINES BESCHICHTERS MIT EINER REINIGUNGSVORRICHTUNG**
3D PRINTER HAVING A RECOATER AND METHOD FOR CLEANING A RECOATER WITH A RECOATER-CLEANING DEVICE
IMPRIMANTE 3D DOTÉE D'UN DISPOSITIF DE DÉPÔT ET MÈTHODE DE NETTOYAGE DU DISPOSITIF DE DÈPÔT AVEC UN DISPOSITIF DE NETTOYAGE DU DISPOSITIF DE DÉPÔT

(30) Priorität: 21.07.2017 DE 102017116537
(43) Veröffentlichungstag der Anmeldung: 01.05.2019
(73) Patentinhaber: ExOne GmbH, 86368 Gersthofen (DE)
(72) Erfinder: MÜLLER, Alexander, 86420 Diedorf-Vogelsang (DE); LEINAUER, Thomas, 86420 Diedorf (DE); MÜLLER, Andreas, 86152 Augsburg (DE)
(74) Vertreter: Viering, Jentschura & Partner mbB Patent- und Rechtsanwälte
(86) Internationale Anmeldenummer: PCT/EP2018/064931
(87) Internationale Veröffentlichungsnummer: WO 2019/015853

(56) Entgegenhaltungen:
- WO-A1-2016/146289
- DE-A1-102009 056 687
- DE-A1-102012 022 859

## Beschreibung

Die vorliegende Erfindung betrifft einen 3D-Drucker mit einem Beschichter und einer Beschichter-Reinigungsvorrichtuhg sowie ein Verfahren zum Reinigen eines Beschichters von einem 3D-Drucker mit einer Beschichter-Reinigungsvorrichtung. Insbesondere betrifft die vorliegende Erfindung einen 3D-Drucker mit einem Beschichter und einer Beschichter-Reinigungsvorrichtung gemäß dem Oberbegriff von Anspruch 1,

Es sind verschiedene generative Fertigungsverfahren (und folglich verschiedene Arten von 3D-Druckern, also Maschinen/Anlagen zum schichtweisen Aufbau eines Bauteils) bekannt.

Einige generative Fertigungsverfahren haben die folgenden Schritte gemeinsam:
(1) Es wird zunächst Partikelmaterial (bzw. partikelförmiges Baumaterial) vollflächig/durchgängig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich (entsprechend dem zu fertigenden Bauteil) selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht aufgetragen wird (alternativ können zum Beispiel der Beschichter und die Druckvorrichtung jeweils um eine Schichtdicke angehoben werden).
(4) Schließlich kann das gefertigte Bauteil, das aus den verfestigten Teilbereichen gebildet ist und von losem, nicht-verfestigtem Partikelmaterial gestützt und umgeben ist, entpackt werden,

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein Beispiel für eine solche Baubox ist zum Beispiel in DE 10 2009 056 696 A1 beschrieben. Der Bauraum kann aber zum Beispiel auch seitlich frei, d.h., umfangsseitig unbegrenzt sein. Ein oberer Bereich des Bauraums kann zum Beispiel als Baufeld bezeichnet werden.

In dem obigen Schritt (1) kommt in der Regel ein Beschichter (auch "Recoater" genannt) zum Einsatz. Es sind unterschiedliche Beschichter zur Verwendung in einem 3D-Drucker bekannt, mit denen ein partikelförmiges Baumaterial in Form einer gleichmäßigen, vollflächigen/durchgängigen Schicht auf das Baufeld (auch Baufläche oder Baubereich genannt) aufgebracht werden kann.

Eine Art von Beschichter verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen (und folglich groß-dimensionierte 3D-Drucker) sind mit einem Walzen-Beschichter schwierig darzustellen, unter anderem wegen einer möglichen Durchbiegung der Walze.

Eine andere Art von Beschichter (sog. "Behälter-Beschichter", zum Beispiel "Schlitz-Beschichter") verwendet einen Behälter, der einen inneren Hohlraum zur Aufnahme von partikelförmigem Baumaterial definiert, und hat einen (zum Beispiel langgestreckten) Ausgabebereich, zum Beispiel aufweisend einen (zum Beispiel langestreckten) Ausgabeschlitz, zum Ausgeben des partikelförmigen Baumaterials. Der Behälter-Beschichter kann zum Beispiel über ein Baufeld hinweg verfahrbar sein (zum Beispiel horizontal, zum Beispiel quer zu seiner Längsrichtung), wobei das partikelförmige Baumaterial durch den (langgestreckten) Ausgabebereich auf das Baufeld ausgebbar ist, um dadurch eine gleichmäßige, vollflächige/durchgängige Baumaterial-Schicht auf das Baufeld aufzubringen. Der Beschichter kann zum Beispiel langgestreckt sein, um die Länge oder Breite eines rechteckigen Baufelds zu überspannen bzw. abzudecken.

Beschichteranordnungen mit großen Längen (und folglich groß-dimensionierte 3D-Drucker) können mit einem Behälter-Beschichter gut realisiert werden.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein/enthalten, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Die vorliegende Erfindung eignet sich besonders für einen 3D-Drucker mit einem Beschichter der oben beschriebenen, zweitgenannten Art, kurz einem "Behälter-Beschichter", zum Beispiel "Schlitz-Beschichter"; eine Anwendung auf andere Beschichtertypen ist allerdings nicht ausgeschlossen.

Ein solcher Beschichter kann zum Beispiel mit einem Streichelement versehen sein, von welchem auf das Baufeld aufgebrachtes Baumaterial überstrichen wird, um das Baumaterial zu verdichten und/oder zu nivellieren. Das Streichelement kann zum Beispiel benachbart zu einem/dem Ausgabeschlitz angeordnet sein und/oder diesen zumindest teilweise begrenzen, und kann zum Beispiel zusammen mit dem Ausgabeschlitz den sogenannten Ausgabebereich des Beschichters bilden.

Ein Beispiel für einen "Schlitz-Beschichter" ist aus der DE 10 2009 056 689 A1 bekannt. Siehe dort zum Beispiel die Figuren 17-20.

Ein weiteres Beispiel für einen "Schlitz-Beschichter" ist aus der WO 2016/030417 A1 und der WO 2016/030375 A2 bekannt, die jeweils einen sogenannten bidirektionalen Beschichter beschreiben. Siehe zum Beispiel die Figuren 2, 4, 5, 6, 7 der WO 2016/030417 A1.

Es ist zudem bekannt, einen 3D-Drucker mit einer Beschichter-Reinigungsvorrichtung auszustatten, mit welcher an der Unterseite des Beschichters bzw. an dessen Ausgabebereich anhaftende Verschmutzungen, zum Beispiel Baumaterial, entfernt bzw. abgewischt werden können und/oder mit welcher der Ausgabeschlitz des Ausgabebereichs abgewischt werden kann, um ggf. Verstopfungen zu lösen. Siehe zum Beispiel DE 10 2009 056 687 A1; dort zum Beispiel die Figuren 21, 24 und 25; oder DE 10 2015 103 726 A1; dort zum Beispiel die Figuren 1 und 2.

Die aus DE 10 2009 056 687 A1 bekannte Beschichter-Reinigungsvorrichtung weist ein langgetrecktes Wischelement in Form einer Bürste auf, das unterhalb des Beschichter-Behälters zumindest teilweise in einem Baumaterial-Auffangbehälter aufgenommen ist. Das Wischelement ist drehbar abgestützt und mittels eines Wischelement-Antriebs drehbar antreibbar. Die Reinigung des Beschichters bzw. von dessen Ausgabebereich, in anderen Worten die Wischbewegung, erfolgt hierbei in einer Richtung quer zur Längsrichtung des Beschichters.

Das in DE 10 2009 056 687 A1 beschriebene, langgestreckte Wischelement kann unter gewissen Umständen einen Nachteil aufweisen, da es insbesondere bei großen Längen des Wischelements zu einer Durchbiegung desselben kommen kann und infolge dessen die Reinigungsqualität des Beschichters bzw. dessen Ausgabebereichs verringert sein kann. Eine Reinigung des Wischelements selbst ist in DE 10 2009 056 687 A1 nicht beschrieben, wobei eine Verschmutzung des Wischelements selbst ein Reinigungsergebnis beinträchtigen kann.

Die aus DE 10 2015 103 726 A1 bekannte Beschichter-Reinigungsvorrichtung weist ein Wischelement (ebenfalls in Form einer Bürste, alternativ Wischblatt oder Wischlippe) auf, das für eine Reinigung des Ausgabebereichs des Beschichters entlang einer Längsrichtung des Ausgabebereichs bewegt wird, wobei das Wischelement an einer umlaufenden Trägerstruktur angeordnet ist.

Durch das in DE 10 2015 103 726 A1 beschriebene Wischelement und insbesondere dessen Bewegungsrichtung relativ zu der Längsrichtung des Ausgabebereichs kann zwar das oben beschriebene Problem des Durchbiegens des Wischelements gelöst werden, jedoch kann durch die Bewegung des Wischelements entlang der Längsrichtung des Ausgabebereichs eine Reinigungsdauer verlängert sein. Eine Reinigung des Wischelements selbst ist in DE 10 2015 103 726 A1 angedeutet und lässt sich unter entsprechendem Mehraufwand implementieren.

Es kann als eine Aufgabe der vorliegenden Erfindung angesehen werden, einen 3D-Drucker bzw. eine Beschichter-Reinigungsvorrichtung und ein Verfahren zum Reinigen eines Beschichters von einem 3D-Drucker anzugeben, mit denen eine zweckmäßige Beschichter-Reinigung erzielbar ist, insbesondere auf einfache Art und Weise und/oder dauerhaft und/oder auch für groß dimensionierte 3D-Drucker und/oder auf kompakte Art und Weise.

Alternativ oder zusätzlich kann es als eine Aufgabe der vorliegenden Erfindung angesehen werden, einen 3D-Drucker bzw. bzw. eine Beschichter-Reinigungsvorrichtung und ein Verfahren zum Reinigen eines Beschichters von einem 3D-Drucker anzugeben, mit denen eine effiziente (z.B. schnelle) Beschichter-Reinigung gewährleistet werden kann, insbesondere auch für groß dimensionierte 3D-Drucker.

Alternativ oder zusätzlich kann es als eine Aufgabe der vorliegenden Erfindung angesehen werden, einen 3D-Drucker bzw. bzw. eine Beschichter-Reinigungsvorrichtung und ein Verfahren zum Reinigen eines Beschichters von einem 3D-Drucker anzugeben, mit denen ein verbessertes/gutes Reinigungsergebnis erzielbar ist und/oder mit denen eine zügige/schnelle Reinigung des Beschichters möglich ist, insbesondere auch für lange Beschichter und/oder groß-dimensionierte 3D-Drucker.

Hierzu stellt die vorliegende Erfindung einen 3D-Drucker gemäß Anspruch 1, sowie ein Verfahren zum Reinigen eines Beschichters von einem 3D-Drucker gemäß Anspruch 15 bereit. Weitere Ausgestaltungen des erfindungsgemäßen 3D-Druckers sind in den abhängigen Ansprüchen beschrieben.

Die Erfinder der vorliegenden Erfindung haben herausgefunden, dass es durch Verwenden einer Reinigungsbahn möglich ist, den Ausgabebereich/Beschichter zweckmäßig/wirksam und effizient zu reinigen. Anders als im Stand der Technik, der die Verwendung einer drehbaren Bürste oder einer mit einem Reinigungselement bestückten, umlaufenden Trägerstruktur beschreibt, wird gemäß der vorliegenden Erfindung also ein bahnförmiges Reinigungselement verwendet. Die Beschichter-Reinigungsvorrichtung und der Beschichter sind dabei eingerichtet, den Ausgabebereich/Beschichter und die Reinigungsbahn in Kontakt miteinander zu bringen und eine Relativbewegung zwischen Ausgabebereich/Beschichter und Reinigungsbahn auszuführen für ein Abwischen des Ausgabebereichs/Beschichters mittels der Reinigungsbahn.

Gemäß verschiedenen Aspekten der vorliegenden Erfindung ist ein 3D-Drucker mit einem Beschichter und einer Beschichter-Reinigungsvorrichtung bereitgestellt. Der Beschichter hat einen (z.B. langgestreckten) Behälter, der einen inneren Hohlraum zur Aufnahme von partikelförmigem Baumaterial definiert, und einen (z.B. langgestreckten) Ausgabebereich zum Ausgeben des partikelförmigen Baumaterials (z.B. auf ein Baufeld). Die Beschichter-Reinigungsvorrichtung weist eine Reinigungsbahn auf. Die Beschichter-Reinigungsvorrichtung und der Beschichter sind eingerichtet, um den Ausgabebereich und/oder die Reinigungsbahn für ein Abwischen des Ausgabebereichs mittels der Reinigungsbahn (d.h., unter Verwendung der Reinigungsbahn, z.B. an der Reinigungsbahn durch Bewegen des Beschichters und/oder durch die bzw. mit der Reinigungsbahn durch Bewegen der Reinigungsbahn) relativ zueinander zu bewegen.

Die Reinigungsbahn kann zum Beispiel eine Dicke haben, die kleiner ist als eine Erstreckung der Reinigungsbahn in Längsrichtung und kleiner ist als eine Erstreckung der Reinigungsbahn in Breitenrichtung (zum Beispiel kann die Dicke kleiner gleich 1/10 der Länge und/oder der Breite sein). Die Reinigungsbahn kann zum Beispiel eine Breite haben, die kleiner ist als eine Erstreckung der Reinigungsbahn in Längsrichtung (zum Beispiel kann die Breite kleiner gleich 1/5 oder 1/10 der Länge sein). Die Breite der Reinigungsbahn kann zum Beispiel größer oder gleich der halben oder ganzen/vollen Erstreckung des Ausgabebereichs in dessen Längsrichtung sein (Länge des Ausgabebereichs, zum Beispiel Länge der Streichfläche). Zum Beispiel kann die Breite der Reinigungsbahn größer gleich 30cm betragen, zum Beispiel größer gleich 50cm, zum Beispiel größer gleich 70cm.

Die Relativbewegung erfolgt zum Beispiel in Längsrichtung der Reinigungsbahn und/oder in einer Richtung quer (d.h., in einem Winkel, zum Beispiel orthogonal) zu einer Längsrichtung des Beschichters und/oder dessen Ausgabebereich.

Um den Ausgabebereich und/oder die Reinigungsbahn für ein Abwischen des Ausgabebereichs mittels der Reinigungsbahn relativ zueinander zu bewegen, kann zum Beispiel die Reinigungsbahn stillstehen, und der Ausgabebereich (zum Beispiel der Beschichter) kann (zum Beispiel gesteuert, zum Beispiel mittels eines (elektrischen) Antriebs) bewegt werden. Alternativ dazu kann für ein Abwischen des Ausgabebereichs zum Beispiel die Reinigungsbahn (zum Beispiel gesteuert, zum Beispiel mittels eines (elektrischen) Antriebs) bewegt werden, und der Ausgabebereich kann stillstehen. Ferner alternativ dazu können für ein Abwischen des Ausgabebereichs zum Beispiel die Reinigungsbahn und der Ausgabebereich (zum Beispiel der Beschichter) (zum Beispiel gesteuert, zum Beispiel mittels eines (elektrischen) Antriebs) bewegt werden. D.h., im Sinne dieser Anmeldung umfasst der Ausdruck "Abwischen des Ausgabebereichs mittels der Reinigungsbahn" eine Bewegung der Reinigungsbahn und/oder des Ausgabebereichs (zum Beispiel des Beschichters). Unabhängig davon kann eine Antriebsvorrichtung vorgesehen sein, die eingerichtet ist, die Reinigungsbahn zum Bereitstellen eines frischen Abschnitts davon vor, nach oder während einer Reinigung zu bewegen, zum Beispiel in ihrer Längsrichtung.

Die Erfinder der vorliegenden Erfindung haben herausgefunden, dass es für ein Abwischen des Ausgabebereichs mittels der Reinigungsbahn vorteilhaft sein kann, wenn der Beschichter bzw. dessen Ausgabebereich bewegt wird, zum Beispiel quer (d.h., in einem Winkel, zum Beispiel orthogonal) zu einer Längsrichtung des Beschichters und/oder dessen Ausgabebereich, zum Beispiel bidirektional, d.h. hin und her. Die Reinigungsbahn kann dabei zum Beispiel stillstehen oder ebenfalls bewegt werden.

Der 3D-Drucker kann zum Beispiel eine Steuerung aufweisen, die eingerichtet ist, um eine/die Bewegung des Beschichters und/oder der Reinigungsbahn zu steuern. Die Beschichter-Reinigungsvorrichtung kann zum Beispiel einen (elektrischen) Antrieb aufweisen, der eingerichtet ist, um die Reinigungsbahn (gesteuert) zu bewegen. Der 3D-Drucker kann zum Beispiel einen (elektrischen) Antrieb aufweisen, der eingerichtet ist, um den Beschichter (gesteuert) zu bewegen.

Zum Abwischen des Ausgabebereichs mittels der Reinigungsbahn sind der Ausgabebereich und die Reinigungsbahn entlang eines (zum Beispiel linienförmigen oder streifenförmigen) Kontaktbereichs miteinander in Kontakt. Der Kontaktbereich kann sich zum Beispiel über die gesamte Länge des Ausgabebereichs erstrecken. Dies erlaubt eine besonders effiziente Reinigung.

Zum Beispiel kann in einer Draufsicht auf den Beschichter von oben eine Längsachse des Ausgabebereichs (zum Beispiel eine von dem Ausgabebereich oder einer Streichfläche desselben definierte Längsachse) in einem Winkel zu einer Längsachse der Reinigungsbahn (zum Beispiel einer von der Reinigungsbahn definierten Längsachse) angeordnet sein, wenn sich der Beschichter in einer Reinigungsposition befindet, in der er über der Beschichter-Reinigungsvorrichtung angeordnet ist. Die Längsachse des Ausgabebereichs kann zum Beispiel parallel zu oder deckungsgleich mit einer Längsachse des Behälters sein. Der (kleinste) Winkel zwischen der Längsachse des Ausgabebereichs und der Längsachse der Reinigungsbahn kann zum Beispiel größer gleich 30°, zum Beispiel größer gleich 45°, zum Beispiel größer gleich 60°, zum Beispiel größer gleich 75°, zum Beispiel größer gleich 85°, zum Beispiel im Wesentlichen 90° sein. Hierdurch kann eine effiziente Reinigung erreicht werden.

Die Reinigungsbahn kann in der Draufsicht zum Beispiel zumindest im Wesentlichen die Form eines Rechtecks haben. Unter Breite kann dann die Abmessung der kurzen/kürzeren Seite des Rechtecks verstanden werden.

Der Ausdruck "zumindest im Wesentlichen" im Sinne dieser Anmeldung umfasst die genannte Größe bzw. Form und die in der Technik auftretenden Toleranzen.

Die Beschichter-Reinigungsvorrichtung kann zum Beispiel stationär, d.h. ortsfest, ausgebildet sein, wobei zum Beispiel Teile der Beschichter-Reinigungsvorrichtung, zum Beispiel die Reinigungsbahn, bewegbar ausgebildet sein können. Die Beschichter-Reinigungsvorrichtung kann zum Beispiel eingerichtet sein, um nach/während/vor dem Abwischen des Ausgabebereichs mittels der Reinigungsbahn einen neuen/frischen (nicht verschmutzten) Abschnitt Reinigungsbahn bereitzustellen, zum Beispiel durch eine gesteuerte Bewegung der Reinigungsbahn.

Die Reinigungsbahn kann zum Beispiel auswechselbar bzw. austauschbar sein und/oder als Einweg-Reinigungsbahn ausgeführt sein.

Durch ein Bewegen der Bahn, zum Beispiel in deren Längsrichtung, kann stets ein frischer Bahnabschnitt bereitgestellt werden, was ein wirksames Reinigen des Beschichters erlaubt. Durch ein einfaches Austauschen der (verbrauchten) Bahn kann sichergestellt Werden, dass das Reinigungselement (bzw. ein Reinigungsabschnitt davon) selbst stets sauber ist; eine aufwendige Reinigung des Reinigungselements selbst in dem 3D-Drucker kann eingespart werden. Die entnommene Reinigungsbahn kann entweder extern gereinigt oder entsorgt werden.

Gemäß verschiedenen Ausführungsformen kann die Reinigungsbahn endlich (d.h., nicht endlos oder umlaufend) ausgebildet sein, mit einem ersten Ende und einem zweiten Ende, wobei erstes und zweites Ende getrennt voneinander sind, d.h. nicht miteinander verbunden.

Der 3D-Drucker kann zum Beispiel eingerichtet sein, um das eingangs beschriebene generative Fertigungsverfahren auszuführen, zumindest die Schritte (1) bis (3).

Der 3D-Drucker kann zum Beispiel einen wie eingangs beschriebenen Bauraum aufweisen, in dem das oder die Bauteile gefertigt werden und der zum Beispiel von einer sogenannten Baubox (auch "Jobbox" genannt) zumindest mitausgebildet wird. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden.

Der 3D-Drucker kann zum Beispiel eine Druckvorrichtung mit einem Druckkopf aufweisen, der eingerichtet ist, um auf einen Teilbereich einer zuvor aufgebrachten Baumaterial-Schicht gesteuert ein Behandlungsmittel aufzubringen. Das Behandlungsmittel kann dabei zu einer (unmittelbaren und/oder späteren) Verfestigung der Baumaterial-Schicht in dem Teilbereich beitragen. Zum Beispiel kann das Behandlungsmittel ein Bindemittel sein/enthalten, zum Beispiel eine Bindemittel-Komponente eines Mehrkomponenten-Bindemittels.

Der 3D-Drucker kann zum Beispiel eine stationäre Befüllungsstation aufweisen, in die der Beschichter verfahrbar ist, um den Behälter mit (frischem) Baumaterial zu befüllen.

Der Beschichter kann zum Beispiel in eine Reinigungsposition verfahrbar sein, in der er über der (zum Beispiel stationären) Beschichter-Reinigungsvorrichtung angeordnet ist. Die Beschichter-Reinigungsposition bzw. die Beschichter-Reinigungsvorrichtung können zum Beispiel benachbart zu einem/dem Baufeld angeordnet sein.

Der Beschichter (oder "Recoater") kann als sogenannter "Behälter-Beschichter" ausgebildet sein, zum Beispiel als "Schlitz-Beschichter" (d.h., mit einem Ausgabeschlitz).

Der Beschichter kann zum Beispiel über ein/das Baufeld hinweg verfahrbar sein (zum Beispiel horizontal, zum Beispiel quer zu seiner Längsrichtung), wobei das partikelförmige Baumaterial durch den (zum Beispiel langgestreckten) Ausgabebereich auf das Baufeld ausgebbar ist, um dadurch eine gleichmäßige, vollflächige/durchgängige Baumaterial-Schicht auf das Baufeld aufzubringen. Der Beschichter kann langgestreckt sein, um zum Beispiel die Länge oder Breite eines rechteckigen Baufelds zu überspannen bzw. abzudecken. Der Ausgabebereich kann zum Beispiel an einem unteren Abschnitt des Beschichters ausgebildet sein und/oder dem Baufeld zugewandt sein.

Der Behälter kann zum Beispiel eine langgestreckte Form aufweisen, um zum Beispiel die gesamte Länge oder die gesamte Breite eines rechteckigen Baufelds zu überspannen bzw. abzudecken. Der innere Hohlraum des Behälters kann zum Beispiel einen Schacht ausbilden, der im Querschnitt zum Beispiel (zumindest abschnittsweise) nach unten hin verjüngt ist und/oder eine Trichterform aufweist. Der innere Hohlraum zur Aufnahme von partikelförmigem Baumaterial kann zum Beispiel in den (zum Beispiel langgestreckten) Ausgabebereich, zum Beispiel einem (zum Beispiel länglichen) Ausgabeschlitz desselben, münden bzw. mit diesem in Verbindung stehen.

Der Behälter kann zum Beispiel über einen mitfahrenden Vorlagebehälter mit Baumaterial versorgt werden. In dem optionalen Vorlagebehälter und/oder dem Behälter kann zum Beispiel eine Verteilvorrichtung zum Verteilen des Baumaterials aufgenommen sein, zum Beispiel in Form einer Verteilerschnecke.

Der (zum Beispiel langgestreckte) Ausgabebereich kann zum Beispiel einen (zum Beispiel länglichen) Ausgabeschlitz aufweisen.

Der Ausgabereich kann zum Beispiel zumindest eine (zum Beispiel eine oder zwei) langgestreckte Streichfläche aufweisen, die zum Beispiel benachbart zu dem Ausgabeschlitz angeordnet ist. Die Streichfläche kann zum Beispiel streifenförmig ausgebildet sein. Die Streichfläche kann zum Beispiel nach unten hin ausgerichtet sein und/oder dem Baufeld zugewandt sein. Im Fall von zwei Streichflächen können diese auf zwei gegenüberliegenden Seiten des Ausgabeschlitzes in Querrichtung desselben angeordnet sein, um einen bidirektionalen Beschichter bereitzustellen.

Die mindestens eine Streichfläche ist eingerichtet, um aus dem Behälter ausgegebenes Baumaterial zu überstreichen, zum Beispiel um dadurch das ausgegebene Baumaterial zu nivellieren und/oder zu verdichten. Durch die Relativbewegung zwischen Ausgabebereich und Reinigungsbahn kann die mindestens eine Streichfläche für eine Reinigung derselben mittels der Reinigungsbahn abgewischt werden. Dadurch können zum Beispiel an der Streichfläche anhaftende Verschmutzungen entfernt werden, zum Beispiel Komponenten eines Behandlungsmittels und/oder Komponenten eines Baumaterials.

Die Streichfläche kann zum Beispiel von einem Streichelement gebildet sein, welches zum Beispiel in Form einer sogenannten Streichleiste und/oder Streichklinge vorgesehen sein kann, zum Beispiel von einem nach unten ausgerichteten Abschnitt des Streichelements, der zum Beispiel nach unten hin vorspringen/vorstehen kann, zum Beispiel stufenförmig.

Zum Beispiel kann die (jeweilige) Streichfläche planar ausgebildet sein. Die ein oder mehreren Streichflächen bzw. Streichelemente können zum Beispiel benachbart zu einem/dem Ausgabeschlitz angeordnet sein und/oder diesen begrenzen, zum Beispiel jeweils in Querrichtung. Zum Beispiel kann ein/der Ausgabeschlitz in Querrichtung zwischen zwei Streichflächen bzw. Streichelementen angeordnet sein. Der Beschichter kann dadurch als bidirektionaler Beschichter ausgebildet bzw. betrieben werden, wobei jeweils die in Fahrtrichtung hinten liegende Streichfläche aktiv ist. Zum Beispiel kann dabei zumindest die jeweils aktive Streichfläche (zum Beispiel der gesamte Beschichter) gekippt werden, um einen sogenannten Anstellwinkel der Streichfläche bezüglich des Baufelds und dadurch einen Verdichtungsgrad des Partikelmaterials einzustellen.

Die ein oder mehreren Streichelemente können zum Beispiel an dem Behälter des Beschichters befestigt sein. Die ein oder mehreren Streichelemente können zum Beispiel an einer Trägerstruktur des Beschichters befestigt und/oder an dieser aufgehängt sein, zum Beispiel gemeinsam mit einer optionalen Schließvorrichtung zum selektiven Schließen des Ausgabeschlitzes. Die besagte Trägerstruktur kann sich zum Beispiel quer zur Bewegungsrichtung des Beschichters und/oder in Längsrichtung des Beschichters erstrecken. An der Trägerstruktur kann auch der Behälter befestigt sein, zum Beispiel separat von dem mindestens einen Streichelement und/oder der optionalen Schließvorrichtung.

Zum Beispiel können der (langgestreckte) Ausgabebereich und/oder der (längliche) Ausgabeschlitz und/oder die ein oder mehreren (langgestreckten) Streichflächen nach unten ausgerichtet sein, zum Beispiel zu dem Baufeld hin. Der (langgestreckte) Ausgabebereich und/oder der (längliche) Ausgabeschlitz und/oder die ein oder mehreren (langgestreckten) Streichflächen können eine erste Erstreckung in Längsrichtung und eine zweite Erstreckung in Querrichtung haben, wobei die erste Erstreckung größer ist als die zweite Erstreckung, zum Beispiel mindestens um den Faktor 2, 3, 4, 5, 6, 7, 8, 9, 10, 11, 12, 13, 14, 15, 16, 17, 18, 19, 20 oder größer. Zum Beispiel können der (langgestreckte) Ausgabebereich und/oder der (längliche) Ausgabeschlitz und/oder die jeweilige (langgestreckte) Streichfläche in der Draufsicht zumindest im Wesentlichen eine rechteckige Form und/oder Streifenform aufweisen.

Gemäß verschiedenen Ausführungsformen kann sich die Reinigungsbahn in einer Querschnittsansicht (zum Beispiel einer Querschnittsansicht orthogonal zu einer Längsachse der Streichfläche) des Beschichters derart von unten an die mindestens eine Streichfläche (zum Beispiel an einen/den Kontaktbereich, an dem die Reinigungsbahn und die Streichfläche in Kontakt sind) annähern, dass die Längsachse der (sich annähernden) Reinigungsbahn mit der zu reinigenden Streichfläche einen spitzen (Eihtritts-)Winkel formt, wenn sich der Beschichter in einer Reinigungsposition befindet.

Zum Beispiel kann sich die Reinigungsbahn in einer Querschnittsansicht (zum Beispiel einer Querschnittsansicht orthogonal zu einer Längsachse der Streichfläche) des Beschichters nach unten von der mindestens einen Streichfläche (zum Beispiel von einem/dem Kontaktbereich, an dem die Reinigungsbahn und die Streichfläche in Kontakt sind) entfernen, so dass die Längsachse der (sich entfernenden) Reinigungsbahn in einem spitzen (Austritts-)Winkel zu der mindestens einen Streichfläche angeordnet ist, wenn sich der Beschichter in einer Reinigungsposition befindet.

Die Erfinder der vorliegenden Erfindung haben herausgefunden, dass durch Annähern bzw. Entfernen der Reinigungsbahn in einem Winkel die Beschichter-Reinigungsvorrichtung besonders kompakt ausgestaltet werden kann.

Gemäß verschiedenen Ausführungsformen kann die Reinigungsbahn aus einem saugfähigen Material gebildet sein (d.h., kann ein solches aufweisen oder daraus bestehen), das konfiguriert ist, um ein flüssiges Reinigungsmittel in sich aufzunehmen. Die Reinigungsbahn kann z.B. aus einem saugfähigen (z.B. flächenförmigen) Textil, wie z.B. einem saugfähigen Gewebe oder einem saugfähigen Vlies oder einem saugfähigen Tuch gebildet sein. Die Reinigungsbahn kann zum Beispiel eine einschichtige oder eine mehrschichtige (zum Beispiel zweischichtige) Struktur haben. Zum Beispiel kann in einer zweischichtigen Struktur eine saugfähige Schicht (erste Schicht) auf einer zugstabilen Schicht (zweite Schicht) angeordnet sein, wobei zum Beispiel auch beide Schichten saugfähig sein können und die Saugfähigkeit der ersten Schicht größer ist als die Saugfähigkeit der zweiten Schicht.

Hierdurch kann die Reinigungsbahn mit Reinigungsmittel infiltriert werden, d.h. ein flüssiges Reinigungsmittel (zum Beispiel Lösemittel) in der Reinigungsbahn aufgenommen und dort für ein späteres/darauffolgendes Abwischen des Ausgabebereichs bzw. der Streichfläche gespeichert werden, zum Beispiel mit einer definierten bzw. eingestellten Menge, so dass der Ausgabebereich bzw. die Streichfläche mit einer mit Reinigungsmittel befeuchteten Reinigungsbahn abgewischt werden kann, wodurch selbst feste oder "hartnäckige" Anhaftungen/Ablagerungen effizient entfernt werden können.

Zum Beispiel beim Auftragen von feuchtem Baumaterial/Partikelmaterial, zum Beispiel einem mit einer flüssigen Bindemittelkomponente (zum Beispiel einem flüssigen Aktivator) vorgemischten Sand, kann es zu schwer ablösbaren Ablagerungen an dem Beschichter kommen. Beispielsweise können diese Ablagerungen an der sogenannten Abstreifklinge auftreten, d.h. an dem Streichelement. Solche Verunreinigungen können die Qualität des Beschichtungsvorgangs stören/negativ beeinflussen und bis zum Abbruch des Herstellungsprozesses führen. Die Verunreinigungen können mit der Beschichtungslänge und der Anzahl der Schichten zunehmen. Gerade bei großen 3D-Druckern und/oder im Automatikbetrieb, wo viele Baujobs ohne Eingriff eines Bedienpersonals wiederholt ausgeführt werden, kann dies zu Problemen und Einschränkungen in der Bauqualität bis hin zum Jobabbruch führen. Es sind heute diverse Reinigungseinheiten für Pulverauftragvorrichtungen bekannt; siehe die eingangs diskutierten Druckschriften. Mit solchen Vorrichtungen können grobe Anhaftungen sicher entfernt werden; schwieriger gestaltet sich jedoch die Reinigung von festen bzw. "hartnäckigen" Anhaftungen, die sich im Laufe des Baujobs durch zum Beispiel chemische Reaktion bilden. Derartige Verunreinigungen können zum Beispiel zurückzuführen sein auf ein sogenanntes Ausdampfen oder Auskristallisierens des Aktivators, eine unbeabsichtigte Reaktion des Aktivators mit Dämpfen einer bereits aufgedruckten Bindemittelkomponente, ein Anhaften von aufgewirbelter, zuvor aufgedruckter Bindemittelkomponente samt Aktivator an dem Beschichter etc.

Feste bzw. "hartnäckige" Verunreinigungen können zum Beispiel mit einem geeigneten Lösungsmittel entfernt werden, das mittels der saugfähigen Reinigungsbahn zu dem zu reinigenden Ausgabebereich hin transportiert wird. Außerdem können die gelösten Verschmutzungen, also das Lösungsmittel und der darin gelöste Schmutz, zuverlässig in der saugfähigen Reinigungsbahn aufgenommen werden, so dass der Schmutz zuverlässig abtransportiert werden kann.

Gemäß verschiedenen Ausführungsformen kann die Reinigungsbahn eine derartige Erstreckung in Breitenrichtung haben, dass in einer Draufsicht auf den Beschichter von oben und/oder in einer Seitenansicht desselben die beiden Längsenden der mindestens einen Streichfläche sich nicht über die Reinigungsbahn hinaus erstrecken, wenn sich der Beschichter in einer Reinigungsposition befindet.

Hierdurch kann sich der Kontaktbereich, an dem die Reinigungsbahn und die Streichfläche in Kontakt sind, über die gesamte Länge der Streichfläche erstrecken, und eine Reinigung der Streichfläche kann schnell erfolgen.

Gemäß verschiedenen Ausführungsformen kann die Beschichter-Reinigungsvorrichtung eine Andrückvorrichtung aufweisen, welche eingerichtet ist, um die Reinigungsbahn gegen den Ausgabebereich (zum Beispiel die Streichfläche) zu drücken (zum Beispiel in oben erwähntem Kontaktbereich), wenn sich der Beschichter in einer Reinigungsposition befindet. Hierdurch kann ein besonders wirksames Reinigungsergebnis erzielt werden.

Gemäß verschiedenen Ausführungsformen kann die Andrückvorrichtung eine Abstützstruktur aufweisen, über welche die Reinigungsbahn verläuft. Die Abstützstruktur kann zum Beispiel höhenverstellbar sein (in Vertikalrichtung), zum Beispiel mittels eines (elektrischen) Antriebs und/oder gesteuert.

Die Abstützstruktur kann zum Beispiel vertikal unter dem Beschichter angeordnet sein, wenn sich der Beschichter in einer Reinigungsposition befindet. Die Reinigungsbahn kann zum Beispiel zwischen dem Ausgabebereich (zum Beispiel der Streichfläche) und der Abstützstruktur angeordnet sein, wenn sich der Beschichter in einer Reinigungsposition befindet.

Gemäß verschiedenen Ausführungsformen kann die Abstützstruktur ein Gleitelement aufweisen, an dem die Reinigungsbahn abgestützt ist/anliegt. Das Gleitelement kann aus einem elastischen Material gebildet sein, d.h. das Gleitelement kann aus einem elastischen Material bestehen oder mit einem solchen versehen sein, zum Beispiel beschichtet. Zum Beispiel kann ein gummiertes Gleitelement eingesetzt werden/sein. Alternativ oder zusätzlich kann das Gleitelement mit einer Federkraft beaufschlagt sein/werden, welche das Gleitelement gegen die Reinigungsbahn und in der Folge die Reinigungsbahn gegen den Ausgabebereich drückt, wenn sich der Beschichter in einer Reinigungsposition befindet. Die Abstützstruktur kann zum Beispiel eine oder mehrere Federn aufweisen, um das Gleitelement mit einer Federkraft zu beaufschlagen. Die ein oder mehreren Federn können zum Beispiel unter dem Gleitelement angeordnet sein. Das Gleitelement kann in einer Querschnittsansicht zum Beispiel zumindest abschnittsweise und/oder im Wesentlichen rund/sphärisch ausgebildet sein.

Die Abstützstruktur und/oder das Gleitelement können zum Beispiel langgestreckt sein. Die Länge der Abstützstruktur und/oder des Gleitelements kann zum Beispiel gleich oder größer als die Länge des Ausgabebereichs (zum Beispiel der Streichfläche) sein.

Wenn die Abstützstruktur höhenverstellbar ausgebildet ist und/oder das Gleitelement aus einem elastischen Material gebildet ist und/oder das Gleitelement mit einer Federkraft beaufschlagt ist, kann eine Kraft, mit der die Reinigungsbahn gegen den Ausgabebereich (zum Beispiel die Streichfläche) gedrückt wird, definiert eingestellt werden. Dadurch kann eine Reinigungswirkung verbessert sein.

Gemäß verschiedenen Ausführungsformen kann die Beschichter-Reinigungsvorrichtung eine Reinigungsmittel-Zuführvorrichtung aufweisen, die eingerichtet ist, um der Reinigungsbahn ein (zum Beispiel flüssiges) Reinigungsmittel (zum Beispiel gesteuert) zuzuführen.

Zum Beispiel kann die Reinigungsmittel-Zuführvorrichtung eingerichtet sein, um einen Abschnitt der Reinigungsbahn mit Reinigungsmittel zu befeuchten und/oder zu infiltrieren, der in Bahnlängsrichtung gesehen vor oder in einem Kontaktbereich angeordnet ist, an dem sich der Ausgabebereich und die Reinigungsbahn für ein Abwischen des Ausgabebereichs mittels der Reinigungsbahn kontaktieren. Der (zu befeuchtende) Abschnitt der Reinigungsbahn kann sich zum Beispiel über im Wesentlichen die gesamte Breite der Reinigungsbahn erstrecken und/oder eine Erstreckung in Breitenrichtung der Bahn haben, die größer gleich der Länge des Kontaktbereichs ist.

Die Reinigungsmittel-Zuführvorrichtung kann zum Beispiel in das Gleitelement integriert sein. Dazu kann das Gleitelement zum Beispiel eine (zum Beispiel elastische) Leitung (zum Beispiel ein (elastischer) Schlauch oder ein (elastisches) Rohr) sein, die Durchgangslöcher aufweist, durch die das Reinigungsmittel der Reinigungsbahn zuführbar ist. Die Durchgangslöcher können zum Beispiel an einem dem Ausgabebereich (zum Beispiel der Streichfläche) zugewandten Abschnitt des Gleitelements angeordnet sein. Die Durchgangslöcher können zum Beispiel in Intervallen entlang einer/der Längsrichtung des Gleitelements (zum Beispiel entlang einer/der gesamten Länge des Gleitelements) angeordnet sein und/oder im Wesentlichen die gesamte Breite der Reinigungsbahn abdecken.

Alternativ oder zusätzlich kann die Reinigungsmittel-Zuführvorrichtung in Bahnlängsrichtung gesehen vor einem/dem Kontaktbereich angeordnet sein, an dem sich der Ausgabebereich (zum Beispiel die Streichfläche) und die Reinigungsbahn für ein Abwischen des Ausgabebereichs (zum Beispiel der Streichfläche) mit der Reinigungsbahn kontaktieren (zum Beispiel berühren). Dazu kann zum Beispiel eine Reinigungsmittel-Zuführleitung in Bahnlängsrichtung gesehen vor dem Kontaktbereich und benachbart zu der Reinigungsbahn angeordnet sein. Die Reinigungsmittel-Zuführleitung kann zum Beispiel Spritzdüsen aufweisen, die dazu eingerichtet sind, um der Reinigungsbahn das Reinigungsmittel zuzuführen. Die Spritzdüsen können zum Beispiel entlang einer/der Längsrichtung der Reinigungsmittel-Zuführieitung (zum Beispiel in regelmäßigen Abständen, zum Beispiel entlang einer/der gesamten Länge der Reinigungsmittel-Zuführleitung) angeordnet sein, und/oder im Wesentlichen die gesamte Breite der Reinigungsbahn abdecken.

Gemäß verschiedenen Ausführungsformen kann die Beschichter-Reinigungsvorrichtung ein drehbares Aufrollelement, z.B. drehbare Aufrollwalze, aufweisen, auf welches die Reinigungsbahn (zum Beispiel ein verschmutzter/verbrauchter Abschnitt davon) aufrollbar/aufwickelbar ist, wobei das Aufroltelement optional auswechselbar ist für ein Entnehmen der verschmutzten Reinigungsbahn aus der Beschichter-Reinigungsvorrichtung und/oder optional ein (zum Beispiel elektrisch) angetriebenes Aufrollelement ist.

Die Reinigungsbahn kann zum Beispiel an dem Aufrollelement befestigt sein/werden (zum Beispiel mit dem ersten Ende davon). Das Aufrollelement kann zum Beispiel von einer/der Steuerung mittels eines Antriebs antreibbar sein, um die Reinigungsbahn sukzessive darauf aufzuwickeln. Das Aufrollelement kann zum Beispiel in Längsrichtung der Bahn gesehen und/oder in Horizontalrichtung hinter dem Kontaktbereich angeordnet sein. Das Aufrollelement kann zum Beispiel in Vertikalrichtung unter dem Kontaktbereich und/oder der Andrückvorrichtung angeordnet sein.

Gemäß verschiedenen Ausführungsformen kann die Beschichter-Reinigungsvorrichtung ein drehbares Abrollelement, z.B. drehbare Abrollwalze, aufweisen, von welchem die Reinigungsbahn (zum Beispiel ein frischer Abschnitt davon) abrollbar/abwickelbar ist, wobei das Abrollelement optional auswechselbar ist für ein Nachfüllen eines weiteren Abrollelements, auf dem eine frische Reinigungsbahn aufgewickelt ist, und/oder optional ein (zum Beispiel elektrisch) angetriebenes Abrollelement ist.

Das zweite Ende der Reinigungsbahn kann zum Beispiel an dem Abrollelement befestigt sein und von einer Wicklung der Reinigungsbahn bedeckt sein. Im Verlauf der Zeit wird die Reinigungsbahn sukzessive von dem Abrollelement abgewickelt, so dass ein neues/frisches (nicht verschmutztes bzw. sauberes) Stück Reinigungsbahn zum darauffolgenden/nachfolgenden Abwischen bereitgestellt wird. Das Abrollelement kann zum Beispiel in Längsrichtung der Bahn gesehen und/oder in Horizontalrichtung vor dem Kontaktbereich angeordnet sein. Das Abrollelement kann zum Beispiel in Vertikalrichtung unter dem Kontaktbereich angeordnet sein.

Das Aufrollelement und das Abrollelement können zum Beispiel eingerichtet sein, um die Reinigungsbahn während des Abwischens des Ausgabebereichs zu bewegen, zum Beispiel bidirektional. In diesem Fall können beide Elemente angetriebene Elemente sein. Anderenfalls kann es ausreichend sein, zum Beispiel nur die Aufrollwalze anzutreiben.

Gemäß verschiedenen Ausführungsformen kann die Beschichter-Reinigungsvorrichtung einen Sensor aufweisen, der eingerichtet ist, um eine in der Reinigungsbahn aufgenommene Reinigungsmittelmenge zu ermitteln. Der Sensor kann zum Beispiel in Bahnlängsrichtung gesehen vor einem/dem Kontaktbereich und hinter/nach der Reinigungsmittel-Zuführvorrichtung angeordnet sein. Alternativ oder zusätzlich kann der/ein Sensor zum Beispiel in das Gleitelement integriert sein.

Gemäß verschiedenen Ausführungsformen kann die Beschichter-Reinigungsvorrichtung eine Steuerung aufweisen, welche eingerichtet ist, um
die Relativbewegung zwischen Ausgabebereich und Reinigungsbahn, "Bewegungsmuster", und/oder
die Menge und/oder Art des von der Reinigungsmittel-Zuführvorrichtung an die Reinigungsbahn zugeführten Reinigungsmittels und/oder
eine Höheneinstellung der Abstützstruktur und/oder die Federkraft und/oder eine Andrückkraft der Andrückvorrichtung und/oder
einen Antrieb des Aufrollelements und/oder einen Antrieb des Abrollelements und/oder einen Antrieb der Reinigungsbahn und/oder einen Antrieb des Beschichters
zu steuern, zum Beispiel variabel einzustellen, zum Beispiel in Abhängigkeit von einem Verschmutzungsgrad des Ausgabebereichs und/oder einer seit der letzten Reinigung verstrichenen Zeitdauer und/oder einem beim 3D-Druck verwendeten Baumaterial und/oder einer beim 3D-Druck verwendeten Bindemittelkomponente und/oder einer von der Reinigungsbahn aufgenommen Reinigungsmittelmenge.

Zum Beispiel kann ein "Bewegungsmuster" eine Bewegung des Beschichters (zum Beispiel eine Bewegung (zum Beispiel Vor/Hin- und Zurück/Her-Bewegung) in einer Richtung quer (zum Beispiel orthogonal) zu seiner Längsachse und/oder der Längsachse des Ausgabebereichs und/oder der Streichfläche) aufweisen. Die Bewegung des Beschichters kann zum Beispiel kontinuierlich oder mit Unterbrechungen erfolgen. Zum Beispiel kann ein anderes "Bewegungsmuster" eine Bewegung mit einer anderen Geschwindigkeit und/oder einer anderen Bewegungsdauer umfassen, oder (zum Beispiel zusätzlich zu der Bewegung des Beschichters) eine Bewegung der Reinigungsbahn miteinbeziehen, zum Beispiel eine Vor- und Zurückbewegung in Bahnlängsrichtung.

Die Reinigungsmittel-Zuführvorrichtung und/oder der Sensor können zum Beispiel mit der Steuerung verbunden sein. Die Steuerung kann zum Beispiel eingerichtet sein, um die Reinigungsmittel-Zuführvorrichtung gemäß einem Signal von dem Sensor zu steuern. Wenn zum Beispiel mittels des Sensors ermittelt wird, dass eine/die Menge an Reinigungsmittel gering ist, kann die Steuerung die Reinigungsmittel-Zuführvorrichtung ansteuern, um mehr Reinigungsmittel zuzuführen/auszugeben.

Die Beschichter-Reinigungsvorrichtung kann eine Antriebsvorrichtung aufweisen, die eingerichtet ist, um die Reinigungsbahn in Längsrichtung derselben zu bewegen, zum Beispiel an dem Ausgabebereich vorbei und/oder zum Beispiel zum Bereitstellen eines frischen und/oder befeuchteten und/oder infiltrierten Reinigungsbahnabschnitts für ein Abwischen des Ausgabebereichs mittels der Reinigungsbahn.

Die Beschichter-Reinigungsvorrichtung kann zum Beispiel eine Abdeckvorrichtung zum Abdecken eines (zum Beispiel nicht verschmutzten) Abschnitts der Reinigungsbahn aufweisen. Zum Beispiel kann die Abdeckvorrichtung angeordnet sein, um das Abrollelement (nach oben hin) abzudecken, und/oder über dem Abrollelement angeordnet sein. Zum Beispiel kann die Reinigungsmittel-Zuführvorrichtung an der Abdeckvorrichtung angeordnet/angebracht sein. Die Abdeckvorrichtung kann zum Beispiel eine Längserstreckung aufweisen, die gleich oder größer als die Breite der Reinigungsbahn ist.

Gemäß einem weiteren Aspekt der Erfindung sind ein Beschichter und eine Beschichter-Reinigungsvorrichtung bereitgestellt, wobei die Beschichter-Reinigungsvorrichtung eine Reinigungsbahn aufweist und die Beschichter-Reinigungsvorrichtung und der Beschichter eingerichtet sind, um in einem Zustand, in dem der Beschichter von einem Abschnitt der Reinigungsbahn kontaktiert wird/ist, eine Relativbewegung zwischen Beschichter und Reinigungsbahn auszuführen für ein Abwischen des Beschichters mittels der Reinigungsbahn. Beschichter und Beschichter-Reinigungsvorrichtung können dabei wie oben beschrieben ausgebildet sein.

Gemäß verschiedenen Aspekten der vorliegenden Erfindung ist ein Verfahren zum Reinigen eines Beschichters von einem 3D-Drucker mit einer Beschichter-Reinigungsvorrichtung bereitgestellt, wobei die Beschichter-Reinigungsvorrichtung eine Reinigungsbahn hat, welche zum Beispiel aus einem saugfähigen Material hergestellt ist und/oder endlich ausgebildet ist und/oder austauschbar und/oder als Einweg-Bahn ausgebildet ist, aufweisend:
in Kontakt bringen des Beschichters mit der Reinigungsbahn und
Ausführen einer Relativbewegung zwischen dem Beschichter und der Reinigungsbahn für ein Abwischen des Beschichters mittels der Reinigungsbahn, zum Beispiel in einem befeuchteten Zustand der Reinigungsbahn.

Beschichter und Beschichter-Reinigungsvorrichtung können dabei wie oben beschrieben ausgebildet sein. D.h., der Beschichter kann zum Beispiel einen Behälter aufweisen, der einen inneren Hohlraum zur Aufnahme von partikelförmigem Baumaterial definiert, und einen Ausgabebereich zum Ausgeben des partikelförmigen Baumaterials, wobei durch Relativbewegen des Ausgabebereichs und der Reinigungsbahn ein Abwischen des Ausgabebereichs mittels der Reinigungsbahn erfolgt.

Das Verfahren kann zum Beispiel ferner aufweisen Verfahren des Beschichters in eine Beschichter-Reinigungsposition, in der der Beschichter über der Beschichter-Reinigungsvorrichtung angeordnet ist, und/oder Zuführen eines Reinigungsmittels zu der Reinigungsbahn unter Verwendung einer/der Reinigungsmittel-Zuführvorrichtung, und/oder Infiltrieren der Reinigungsbahn mit einem flüssigen Reinigungsmittel unter Verwendung einer/der Reinigungsmittel-Zuführvorrichtung, und/oder Austauschen der (zum Beispiel verschmutzen) Reinigungsbahn gegen eine andere (zum Beispiel nicht verschmutze bzw. frische) Reinigungsbahn, zum Beispiel nachdem die Reinigungsbahn verschmutzt/verbraucht ist oder in Anpassung an ein eingesetztes Baumaterial und/oder Bindersystem und/oder Reinigungsmittel.

In dem Verfahren kann zum Beispiel der Schritt des in Kontakt bringens des Ausgabebereichs mit der Reinigungsbahn aufweisen ein Verfahren des Beschichters zu der Beschichter-Reinigungsvorrichtung bzw. in seine Reinigungsposition und/oder Höhenverstellen einer Abstützstruktur, an der die Reinigungsbahn abgestützt ist, zum Beispiel in Richtung des Ausgabebereichs, zum Beispiel gesteuert und/oder mittels eines Antriebs der Abstützstruktur.

In dem Verfahren kann zum Beispiel der Schritt des Austauschens der Reinigungsbahn aufweisen Auswechseln eines Abrollelements durch ein anderes Abrollelement, auf dem eine andere Reinigungsbahn aufgewickelt ist, und Auswechseln des Aufrollelements durch ein anderes Aufrollelement, auf dem die andere Reinigungsbahn aufgewickelt werden kann.

Im Übrigen gilt das oben für den 3D-Drucker Gesagte analog für das Verfahren.

Des Weiteren gilt sowohl für das Verfahren als auch für den 3D-Drucker das Folgende:
Unter partikelförmigem Baumaterial kann im Sinne dieser Anmeldung ein Baumaterial verstanden werden, welches zumindest einen Typ von Partikelmaterial (zum Beispiel Sand(körner), zum Beispiel Gießereisand, und/oder Metallpartikel und/oder Kunststoffpartikel) aufweist. Es kann auch unterschiedliches Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann femer zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten. Das Riesel- bzw. Fließverhalten des Baumaterials sowie die Reaktivität bzw. Gefahr chemisch bedingter Anhaftungen an dem Beschichter können dabei je nach Baumaterial-Zusammensetzung stark variieren. Entsprechend können auch das zeitliche Auftreten und/oder das Ausmaß der Verschmutzung gemäß der eingesetzten Baumaterial-Zusammensetzung und somit eine erforderliche Reinigung variieren.

Gemäß verschiedenen Ausführungsformen kann der Beschichter zum Beispiel mit einer Vibrationsvorrichtung versehen sein, mit welcher das in dem inneren Hohlraum aufgenommene Partikelmaterial in Vibration versetzbar ist, um das Fließ- bzw. Rieselverhalten des partikelförmigen Baumaterials bzw. den Austrag des partikelförmigen Baumaterials aus dem Ausgabebereich zu beeinflussen, insbesondere zu fördern. Eine solche Vibrationsvorrichtung kann zum Beispiel von einer Rüttelvorrichtung gebildet sein, mit der zumindest ein Wandabschnitt des Behälters in Vibration versetzt bzw. mit einer Rüttelbewegung beaufschlagt werden kann, um den Austrag des partikelförmigen Baumaterials zu beeinflussen. Gemäß verschiedenen Ausführungsformen kann daher auch ein partikelförmiges Baumaterial, das ein schlechtes Riesel- bzw. Fließverhalten hat, unter Verwendung einer Vibrationsvorrichtung in eine zweckmäßige Vibration versetzt werden, und/oder kann ein Wandabschnitt eines das Baumaterial aufnehmenden Behälters unter Verwendung einer Rüttelvorrichtung mit einer zweckmäßigen Rüttelbewegung beaufschlagt werden. Beispielgebende, aber nicht einschränkende Ausführungsformen der vorliegenden Erfindung sind in den Figuren dargestellt und werden im Folgenden näher erläutert.

Es zeigen:
Figur 1 eine Perspektivansicht einer Beschichter-Reinigungsvorrichtung von einem 3D-Drucker gemäß einer Ausführungsform der vorliegenden Erfindung.
Figur 2 eine Querschnittsansicht der Beschichter-Reinigungsvorrichtung von einem 3D-Drucker aus Figur 1.
**Figur** 3 eine vergrößerte Ansicht des Bereichs A aus Figur 2, wobei zusätzlich ein Beschichter (ebenfalls im Querschnitt) gezeigt ist, und wobei die in Figur 2 gezeigte Feder weggelassen ist.
Figur 4 eine Seitenansicht eines Beschichters und einer Beschichter-Reinigungsvorrichtung von einem 3D-Drucker gemäß einer Ausführungsform der vorliegenden Erfindung.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

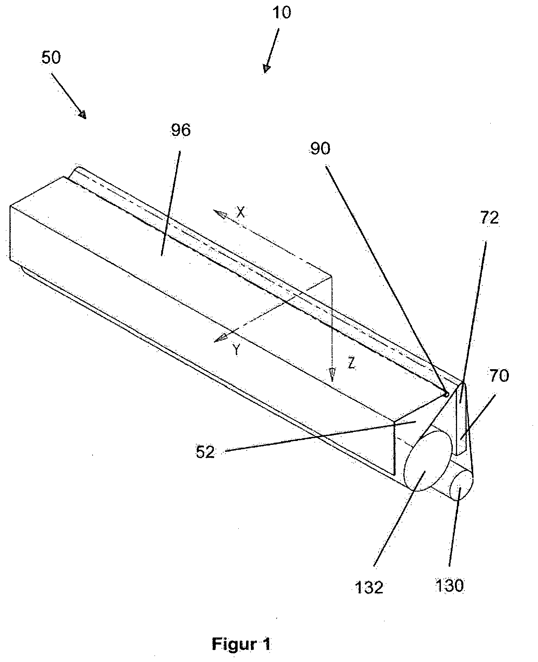

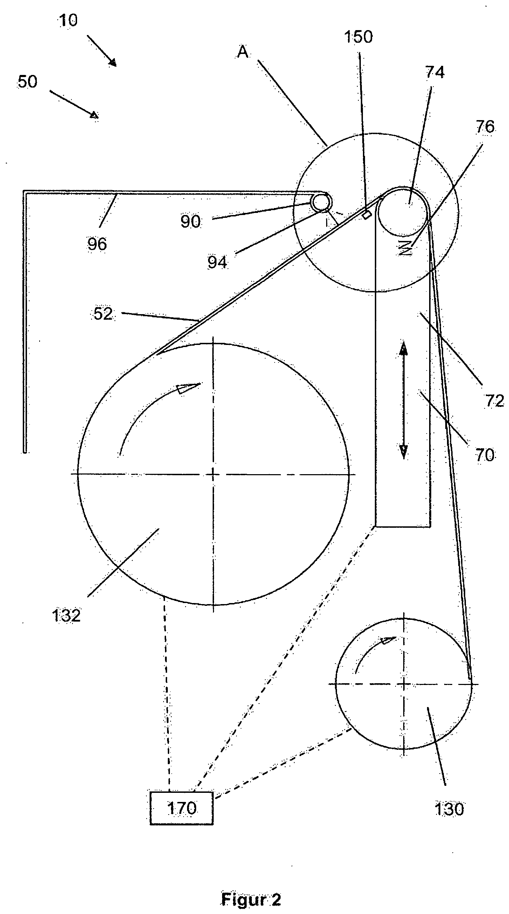

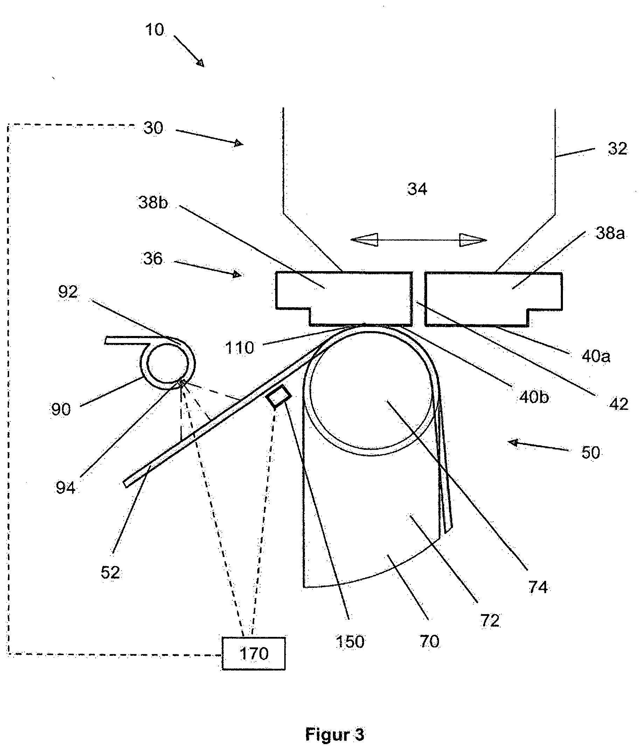

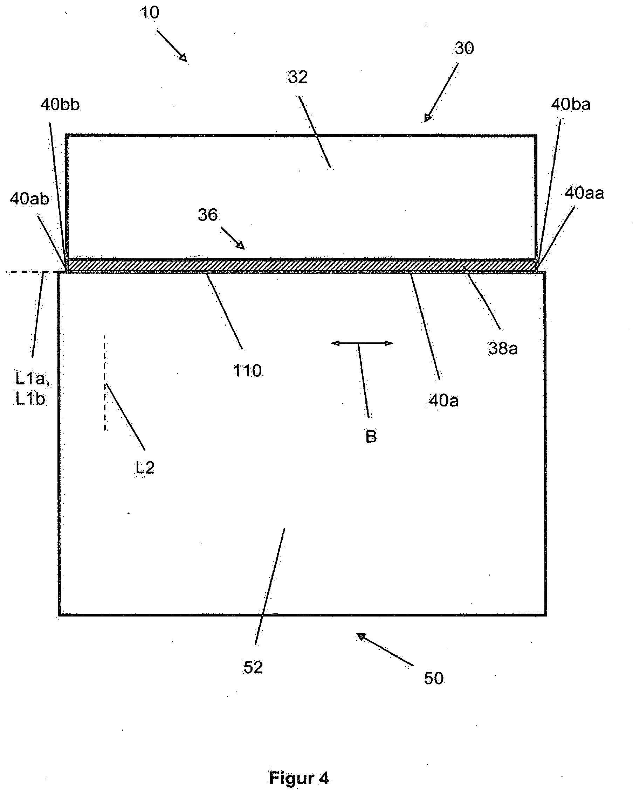

Die **Figur 1** zeigt eine vereinfachte Perspektivansicht einer Beschichter-Reinigungsvorrichtung 50 eines 3D-Druckers 10, wobei in Figur 1 Teile der Beschichter-Reinigungsvorrichtung 50 aus Gründen der Übersichtlichkeit weggelassen sind (wie zum Beispiel der Sensor 150 und die Steuerung 170). Die **Figur 2** zeigt eine vereinfachte Querschnittsansicht der Beschichter-Reinigungsvorrichtung 50 aus Figur 1. Die **Figur 3** zeigt eine vergrößerte Ansicht des Bereichs A aus Figur 2, wobei die Feder 76 weggelassen ist, und wobei zusätzlich ein Beschichter 30 des 3D-Druckers 10 gezeigt ist. Die **Figur 4** zeigt eine vereinfachte Seitenansicht der Beschichter-Reinigungsvorrichtung 50 und des Beschichters 30 des 3D-Druckers 10, wobei in Figur 4 Teile der Beschichter-Reinigungsvorrichtung 50 aus Gründen der Übersichtlichkeit weggelassen sind.

Wie in den Figuren 3 und 4 gezeigt, weist der 3D-Drucker 10 einen Beschichter 30 und eine Beschichter-Reinigungsvorrichtung 50 auf. Der Beschichter 30 weist einen Behälter 32, der einen inneren Hohlraum 34 zur Aufnahme von partikelförmigem Baumaterial definiert, und einen Ausgabebereich 36 zum Ausgeben des partikelförmigen Baumaterials auf. Die Beschichter-Reinigungsvorrichtung 50 weist eine Reinigungsbahn 52 auf. Die Beschichter-Reinigungsvorrichtung 50 und der Beschichter 30 sind eingerichtet, um den Ausgabebereich 36 und die Reinigungsbahn 52 in Kontakt miteinander zu bringen und eine Relativbewegung zwischen dem Ausgabebereich 36 und der Reinigungsbahn 52 auszuführen, derart, dass der Ausgabebereichs 36 mittels der Reinigungsbahn 52 abgewischt wird.

Der Beschichter 30 kann zum Beispiel langgestreckt sein und eine (nicht gezeigte) Längsachse definieren, die in Figur 3 orthogonal zur Blattebene verläuft und die in Figur 4 parallel zur Achse L1a bzw. L1b verläuft (in Figur 1 würde diese Beschichter-Längsachse in X-Richtung verlaufen). Der Ausgabebereich 36 kann zum Beispiel langgestreckt sein und einen (länglichen) Ausgabeschlitz 42 zum Ausgeben des partikelförmigen Baumaterials aufweisen. Der Ausgabebereich 36 kann ferner zum Beispiel zwei (langgestreckte) Streichelemente 38a, 38b aufweisen, die benachbart zu dem Ausgabeschlitz 42 angeordnet sind und diesen seitlich begrenzen. Die Streichelemente können zum Beispiel jeweils eine (langgestreckte) Streichfläche 40a, 40b zum Überstreichen (zum Beispiel Nivellieren und/oder Verdichten) des ausgegebenen Baumaterials definieren. Die zwei Streichflächen 40a, 40b können zum Beispiel jeweils eine Längsachse L1a, L1b und jeweils zwei Längsenden 40aa, 40ab, 40ba, 40bb definieren, wobei die Längsachsen L1a, L1b der Streichflächen 40a, 40b zum Beispiel parallel sind. Durch die Relativbewegung zwischen Ausgabebereich 36 und Reinigungsbahn 52 können zum Beispiel die zwei Streichflächen 40a, 40b für eine Reinigung derselben mittels der Reinigungsbahn 52 abgewischt werden. Zum Erzeugen der Relativbewegung zwischen Ausgabebereich 36 und Reinigungsbahn 52 kann zum Beispiel der Beschichter 30 bewegt werden, zum Beispiel mittels eines (nicht gezeigten) E-Motors, zum Beispiel in Richtung und/oder entlang des in Figur 3 gezeigten Doppelpfeils. Der Beschichter kann dabei zum Beispiel in einer Richtung quer zu seiner Längsachse bewegt werden, zum Beispiel vor und zurück, zum Beispiel derart, dass der gesamte Ausgabebereich über den kontaktierten Bahnabschnitt hinweg bewegt (zum Beispiel mehrfach) und in der Folge gereinigt wird.

Die Reinigungsbahn 52 kann zum Beispiel endlich ausgebildet sein (siehe Figur 2), mit einem ersten Ende und einem zweiten Ende. Die Reinigungsbahn 52 kann zum Beispiel eine Reinigungsbahn-Längsachse L2 und/oder eine Reinigungsbahn-Breitenrichtung B definieren. Die Breitenrichtung B kann zum Beispiel zumindest im Wesentlichen orthogonal zur Längsachse L2 sein. Die Reinigungsbahn 52 kann zum Beispiel ein saugfähiges Material aufweisen bzw. daraus gebildet sein, wobei das saugfähige Material konfiguriert ist, um ein flüssiges Reinigungsmittel in sich aufzunehmen. Die Breite der Reinigungsbahn 52 (d.h., die Erstreckung der Reinigungsbahn 52 in Breitenrichtung B) kann zum Beispiel gleich oder größer als die Länge des Ausgabebereichs 36 (d.h., die Erstreckung des Ausgabebereichs 36 in seine Längsrichtung) und/oder die Länge der Streichflächen 40a, 40b (d.h., die Erstreckung der Streichflächen 40a, 40b in Richtung ihrer Längsachse L1a, L1 b) sein (siehe Figur 4).

Der Beschichter 30 kann zum Beispiel in eine Reinigungsposition verfahrbar sein, in der er über der Beschichter-Reinigungsvorrichtung 50 angeordnet ist (siehe Figur 3). Wenn sich der Beschichter 30 in seiner Reinigungsposition befindet, können zum Beispiel in einer Draufsicht auf den Beschichter 30 von oben die (parallelen) Längsachsen L1a, L1b der Streichflächen 40a, 40b in einem Winkel zu der Längsachse L2 der Reinigungsbahn 52 angeordnet sein. Der Winkel zwischen L1a bzw. L1b und L2 kann zum Beispiel im Wesentlichen 90° sein (siehe hierzu auch Figuren 3 und 4). Wenn sich der Beschichter 30 in seiner Reinigungsposition befindet, kann sich in einer Querschnittsansicht des Beschichters 30 die Reinigungsbahn 52 zum Beispiel von unten an eine der Streichflächen 40a, 40b annähern, so dass die Längsachse L2 der Reinigungsbahn 52 in einem Winkel zu den Streichflächen 40a, 40b angeordnet ist (siehe Figur 3). Wenn sich der Beschichter 30 in seiner Reinigungsposition befindet, kann die Reinigungsbahn 52 eine derartige Erstreckung in Breitenrichtung B haben, dass sich in einer Draufsicht auf den Beschichter 30 von oben die Längsenden 40aa, 40ab, 40ba, 40bb der Streichflächen 40a, 40b nicht über die Reinigungsbahn 52 hinaus erstrecken (siehe hierzu auch Figur 4).

Die Beschichter-Reinigungsvorrichtung 50 kann zum Beispiel eine Andrückvorrichtung 70 aufweisen, welche eingerichtet ist, um die Reinigungsbahn 52 gegen den Ausgabebereich 36 bzw. die Streichflächen 40a, 40b zu drücken, wenn sich der Beschichter 30 in seiner Reinigungsposition befindet (siehe Figur 3). Die Andrückvorrichtung 70 kann zum Beispiel eine Abstützstruktur 72 aufweisen, an der die Reinigungsbahn 52 abgestützt ist und die dazu eingerichtet ist, um die Reinigungsbahn 52 gegen den Ausgabebereich 36 bzw. die Streichflächen 40a, 40b zu drücken, wenn sich der Beschichter 30 in seiner Reinigungsposition befindet. Die Abstützstruktur 72 kann zum Beispiel ein Gleitelement 74 aufweisen, an dem die Reinigungsbahn 52 abgestützt ist/anliegt. Das Gleitelement 74 und/oder die Abstützstruktur 72 können zum Beispiel langgestreckt sein und eine (nicht gezeigte) Längsachse definieren. Eine Länge des Gleitelements 74 (d.h., eine Erstreckung des Gleitelements 74 entlang seiner Längsachse) und/oder der Abstützstruktur 72 (d.h., eine Erstreckung der Abstützstruktur 72 entlang seiner Längsachse) kann gleich oder größer als eine Länge des Ausgabebereichs 36 bzw. der Streichflächen 40a, 40b sein. Das Gleitelement 74 kann zum Beispiel aus einem elastischen Material gebildet sein. Alternativ oder zusätzlich kann das Gleitelement 74 mit einer Federkraft beaufschlagt sein, welche das Gleitelement 74 gegen die Reinigungsbahn 52 und in der Folge die Reinigungsbahn 52 gegen den Ausgabebereich 36 drückt, wenn sich der Beschichter 30 in seiner Reinigungsposition befindet. Um das Gleitelement 74 mit einer Federkraft zu beaufschlagen, kann die Abstützstruktur 72 zum Beispiel Federn 76 aufweisen, die unterhalb des Gleitelements 74 angeordnet sind. Die Federn 76 können zum Beispiel Schraubenfedern sein, wie in Figur 2 gezeigt.

Die Abstützstruktur 72 kann zum Beispiel höhenverstellbar sein, zum Beispiel mittels eines (nicht gezeigten) E-Motors, zum Beispiel in Richtung und/oder entlang des in Figur 2 gezeigten Doppelpfeils. Durch die Höhenverstellung kann die Reinigungsbahn 52 mit dem Ausgabebereich 36 bzw. den Streichflächen 40a, 40b in und außer Kontakt gebracht werden. Zum Beispiel kann sich die Abstützstruktur 72 und somit auch die daran abgestützte Reinigungsbahn 52 in einer abgesenkten Position befinden, wenn sich der Beschichter 30 nicht in seiner Reinigungsposition befindet. Nachdem der Beschichter 30 in seine Reinigungsposition verfahren wurde, kann die Abstützstruktur 72 dann höhenverstellt werden, so dass die Reinigungsbahn 52 mit dem Ausgabebereich 36 bzw. den Streichflächen 40a, 40b in Kontakt gebracht wird.

Wie in Figuren 1 und 2 gezeigt, kann die Beschichter-Reinigungsvorrichtung 50 zum Beispiel eine drehbare Aufrollwalze 130 aufweisen, auf welche die Reinigungsbahn 52 aufrollbar ist. Ferner kann die Beschichter-Reinigungsvorrichtung 50 zum Beispiel eine drehbare Abrollwalze 132 aufweist, von welcher die Reinigungsbahn 52 abrollbar ist. Die Aufrollwalze 130 und/oder die Abrollwalze 132 können auswechselbar und/oder zum Beispiel mittels eines (nicht gezeigten) E-Motors angetrieben sein/werden. Die Aufrollwalze 130 und/oder die Abrollwalze 132 können zum Beispiel jeweils eine (nicht gezeigte) Walzen-Längsachse definieren. Eine Länge der Aufrollwalze 130 (d.h., eine Erstreckung der Aufrollwalze 130 in Richtung ihrer Walzen-Längsachse) und/oder der Abrollwalze 132 (d.h., eine Erstreckung der Abrollwalze 132 in Richtung ihrer Walzen-Längsachse) kann zum Beispiel gleich oder größer als eine Breite der Reinigungsbahn 52 sein.

Obige Andrückvorrichtung kann in Längsrichtung der Bahn gesehen und/oder in horizontaler Richtung zwischen Aufrollwalze und Abrollwalze vorgesehen sein.

Wie beschrieben kann eine frische Reinigungsbahn 52 zum Beispiel auf der Abrollwalze 132 bereitgestellt sein. Alternativ dazu kann zum Beispiel eine frische Reinigungsbahn 52 mehrfach gefaltet sein, in welchem Fall auf die Abrollwalze 132 verzichtet werden kann.

Das erste Ende der Reinigungsbahn 52 kann zum Beispiel an der Aufrollwalze 130 befestigt sein, so dass die Reinigungsbahn 52 durch eine Rotationsbewegung der Aufrollwalze 130 auf diese aufgewickelt werden kann.

Die Reinigungsbahn 52 kann zum Beispiel von der Abrollwalze 132 über die Abstützstruktur 72 (bzw. das Gleitelement 74 derselben) zu der Aufrollwalze 130 verlaufen (siehe Figur 2). Durch eine Rotationsbewegung der Aufrollwalze 130 kann die Reinigungsbahn von der Abrollwalze 132 abgewickelt und auf die Aufrollwalze 130 aufgewickelt werden. Dadurch kann zum Beispiel ein frischer Abschnitt Reinigungsbahn 52 bereitgestellt werden. Zum Beispiel kann nach einem Abwischen des Ausgabebereichs 36 bzw. der Streichfläche 40a, 40b mit der Reinigungsbahn 52 der Abschnitt der Reinigungsbahn 52, mit dem der Ausgabebereich 36 bzw. die Streichfläche 40a, 40b abgewischt wurde, verschmutzt sein. Durch Rotieren der Aufrollwalze 130 kann dann einfach ein frischer, nicht verschmutzter Abschnitt Reinigungsbahn 52 für eine weitere/folgende/spätere Reinigung bereitgestellt werden.

Es kann ausreichend sein, nur die Aufrollwalze 130 anzutreiben, um die Bahn zu bewegen. Dabei kann die Abrollwalze 132 zum Beispiel eingerichtet sein, um einen Abrollwiderstand bereitzustellen bzw. aufzuweisen, so dass die Reinigungsbahn 52 auf Zug gehalten ist. Zusätzlich oder alternativ kann auch ein Bahn-Straffungselement vorgesehen sein.

Die Beschichter-Reinigungsvorrichtung 50 kann zum Beispiel eine Reinigungsmittel-Zuführvorrichtung 90 aufweisen, die eingerichtet ist, um der Reinigungsbahn 52 ein Reinigungsmittel zuzuführen. Die Reinigungsmittel-Zuführvorrichtung 90 kann zum Beispiel in das Gleitelement 74 integriert sein (in den Figuren nicht gezeigt) und/oder in Bahnlängsrichtung (d.h., in Richtung der Längsachse L2 der Reinigungsbahn 52) gesehen vor einem Kontaktbereich 110 angeordnet sein, an dem sich der Ausgabebereich 36 und die Reinigungsbahn 52 für ein Abwischen des Ausgabebereichs 36 mittels der Reinigungsbahn 52 kontaktieren (siehe Figuren 2 und 3). Der Kontaktbereich 110 kann sich zum Beispiel entlang der gesamten Länge des Ausgabebereichs 36 bzw. der Streichflächen 40a, 40b erstrecken (siehe Figur 4). Die Reinigungsmittel-Zuführvorrichtung 90 kann zum Beispiel langgestreckt sein. Die Reinigungsmittel-Zuführvorrichtung 90 kann zum Beispiel eine langgestreckte Reinigungsmittel-Zuführleitung 92 und daran angeordnete Spritzdüsen 94 aufweisen, mit denen ein/das flüssiges Reinigungsmittel auf die Reinigungsbahn 52 gesprüht wird. Eine Länge der Reinigungsmittel-Zuführvorrichtung 90 bzw. deren Reinigungsmittel-Zuführleitung 92 kann zum Beispiel gleich oder größer als eine Breite der Reinigungsbahn 52 sein. Die Spritzdüsen 94 können zum Beispiel in einer Längsrichtung der Reinigungsmittel-Zuführleitung 92 gesehen über die gesamte Länge der Reinigungsmittel-Zuführleitung 92 in regelmäßigen Abständen daran angeordnet sein.

Die Beschichter-Reinigungsvorrichtung 50 kann zum Beispiel eine Abdeckvorrichtung 96 aufweisen, mit der ein frischer, nicht-verschmutzter Abschnitt der Reinigungsbahn 52 abgeschirmt/abgedeckt werden kann, wodurch ein Verschmutzen zumindest erschwert ist. Die Abdeckvorrichtung 96 kann zum Beispiel über der Abrollwalze 132 angeordnet sein. Wie in Figuren 1 bis 3 gezeigt, kann die Reinigungsmittel-Zuführvorrichtung 90 zum Beispiel an der Abdeckvorrichtung 96 angeordnet sein. Zum Beispiel kann die Reinigungsmittel-Zuführleitung 92 an der Abdeckvorrichtung 96 angeordnet/befestigt sein, wobei die Spritzdüsen 94 wie oben beschrieben angeordnet sein können.

Die Beschichter-Reinigungsvorrichtung 50 kann zum Beispiel einen Sensor 150 zum Ermitteln der Reinigungsmittelmenge aufweisen, welche von der Reinigungsbahn 52 aufgenommen ist. Der Sensor kann zum Beispiel in Bahnlängsrichtung gesehen vor dem Kontaktbereich 110 und hinter der Reinigungsmittel-Zuführvorrichtung 90 und benachbart zu der Reinigungsbahn 52 angeordnet sein (siehe Figur 2 und 3). Alternativ oder zusätzlich kann der Sensor 150 zum Beispiel in das Gleitelement 54 integriert sein (nicht gezeigt), zum Beispiel dann, wenn die Reinigungsmittel-Zuführvorrichtung 90 in das Gleitelement 54 integriert ist.

Die Beschichter-Reinigungsvorrichtung 50 kann zum Beispiel eine Steuerung 170 aufweisen, welche eingerichtet ist, die Relativbewegung zwischen Ausgabebereich 36 bzw. Streichflächen 40a, 40b und Reinigungsbahn 52, sog. "Bewegungsmuster", und/oder die Menge und/oder Art des Reinigungsmittels der Reinigungsvorrichtung variabel einzustellen, zum Beispiel in Abhängigkeit von einem Verschmutzungsgrad des Ausgabebereichs 36 (bzw. der Streichflächen 40a, 40b) und/oder einem beim 3D-Druck verwendeten Baumaterial und/oder einer beim 3D-Druck verwendeten Bindemittelkomponente.

Unter Bewegungsmuster werden die Bewegungen des Beschichters 30 und/oder der Reinigungsbahn 52 während des Reinigungsvorgangs verstanden.

Die Steuerung 170 kann zum Beispiel mit einem/dem Antrieb des Beschichters 30, einem/dem Antrieb der Aufrollwalze 130, einem/dem Antrieb der Abrollwalze 132, einem/dem Antrieb der Abstützstruktur 72, den Spritzdüsen 94 und/oder dem Sensor 170 verbunden sein. Die Steuerung 170 kann die Spritzdüsen 94 ansteuern, so dass eine definierte Menge und/oder eine gewünschte Art Reinigungsmittel ausgegeben wird. Die Steuerung 170 kann den Antrieb der Aufrollwalze 130 und/oder den Antrieb der Abrollwalze 132 ansteuern, so dass ein frischer Abschnitt Reinigungsbahn bereitgestellt wird und/oder ein gewünschtes Bewegungsmuster der Reinigungsbahn 52 während des Abwischens des Ausgabebereichs 36 mit der Reinigungsbahn 52 durchgeführt wird. Die Steuerung 170 kann den Antrieb des Beschichters 30 ansteuern, so dass ein gewünschtes Bewegungsmuster des Beschichters 30 während des Abwischens des Ausgabebereichs 36 bzw. der Streichflächen 40a, 40b mit der Reinigungsbahn 52 durchgeführt wird.

Ein entsprechendes Verfahren zum Reinigen eines Beschichters 30 von einem 3D-Drucker 10 mit einer Beschichter-Reinigungsvorrichtung 50, wobei die Beschichter-Reinigungsvorrichtung 50 eine Reinigungsbahn 52 hat, welche zum Beispiel aus einem saugfähigen Material hergestellt ist und/oder endlich ausgebildet ist und/oder als Einweg-Bahn ausgebildet ist und/oder austauschbar ausgebildet ist, kann aufweisen:
in Kontakt bringen des Beschichters 30 mit der Reinigungsbahn 52 (wie in Figur 3 angedeutet) und
Ausführen einer Relativbewegung zwischen dem Beschichter 30 und der Reinigungsbahn 52 (wie ebenfalls in Figur 3 angedeutet) für ein Abwischen des Beschichters 30 mittels der Reinigungsbahn 52, zum Beispiel in einem befeuchteten Zustand der Reinigungsbahn und/oder durch Bewegen des Beschichters, zum Beispiel in einer Richtung quer zu dessen Längsrichtung.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und ihre Äquivalente definiert wird.

## Patentansprüche

1. 3D-Drucker (10) mit einem Beschichter (30) und einer Beschichter-Reinigungsvorrichtung (50),
wobei der Beschichter (30) einen Behälter (32), der einen inneren Hohlraum (34) zur Aufnahme von partikelförmigem Baumaterial definiert, und einen Ausgabebereich (36) zum Ausgeben des partikelförmigen Baumaterials aufweist,
wobei die Beschichter-Reinigungsvorrichtung (50) eine Reinigungsbahn (52) aufweist,
wobei die Beschichter-Reinigungsvorrichtung (50) und der Beschichter (30) eingerichtet sind, um den Ausgabebereich (36) und/oder die Reinigungsbahn (52) für ein Abwischen des Ausgabebereichs (36) mittels der Reinigungsbahn (52) relativ zueinander zu bewegen, und
**dadurch gekennzeichnet, dass** die Beschichter-Reinigungsvorrichtung (50) eine Andrückvorrichtung (70) aufweist, welche eingerichtet ist, um einen Abschnitt der Reinigungsbahn (52) gegen den Ausgabebereich (36) zu drücken, wenn sich der Beschichter (30) in einer Reinigungsposition befindet.

2. 3D-Drucker (10) nach Anspruch 1, wobei die Reinigungsbahn (52) endlich, mit einem ersten Ende und einem zweiten Ende, und/oder als Einweg-Reinigungsbahn und/oder austauschbar ausgebildet ist.

3. 3D-Drucker (10) nach Anspruch 1 oder 2,
wobei der Ausgabebereich (36) mindestens eine langgestreckte Streichfläche (40a, 40b) aufweist, die eingerichtet ist, um aus dem Behälter (32) ausgegebenes Baumaterial zu überstreichen, und
wobei durch die Relativbewegung zwischen Ausgabebereich (36) und Reinigungsbahn (52) die mindestens eine Streichfläche (40a, 40b) für eine Reinigung derselben mittels der Reinigungsbahn (52) abgewischt wird.

4. 3D-Drucker (10) nach Anspruch 3, wobei in einer Draufsicht auf den Beschichter (30) von oben eine Längsachse (L1a, L1b; x) der mindestens einen Streichfläche (40a, 40b) in einem Winkel zu einer Längsachse (L2; y) der Reinigungsbahn (52) angeordnet ist, wenn sich der Beschichter (30) in einer Reinigungsposition befindet, in der er über der Beschichter-Reinigungsvorrichtung (50) angeordnet ist.

5. 3D-Drucker (10) nach Anspruch 3 oder 4, wobei sich die Reinigungsbahn (52) in einer Querschnittsansicht des Beschichters (30) derart von unten an die mindestens eine Streichfläche (40a, 40b) annähert, dass die Längsachse (L2) der Reinigungsbahn (52) mit der mindestens einen Streichfläche (40a, 40b) einen spitzen (Eintritts-)Winkel formt, wenn sich der Beschichter (30) in einer Reinigungsposition befindet.

6. 3D-Drucker (10) nach einem der Ansprüche 3 bis 5, wobei die Reinigungsbahn (52) eine derartige Erstreckung in Breitenrichtung (B) hat, dass in einer Draufsicht auf den Beschichter (30) von oben und/oder in einer Seitenansicht desselben die beiden Längsenden (40aa, 40ab, 40ba, 40bb) der mindestens einen Streichfläche (40a, 40b) sich nicht über die Reinigungsbahn (52) hinaus erstrecken, wenn sich der Beschichter (30) in einer Reinigungsposition befindet.

7. 3D-Drucker (10) nach einem der vorangehenden Ansprüche, wobei die Reinigungsbahn (52) aus einem saugfähigen Material gebildet ist, das konfiguriert ist, um ein flüssiges Reinigungsmittel in sich aufzunehmen, z.B. aus einem saugfähigen Textil, wie z.B. einem saugfähigen Gewebe oder einem saugfähigen Vlies.

8. 3D-Drucker (10) nach einem der vorangehenden Ansprüche, wobei die Andrückvorrichtung (70) eine Abstützstruktur (72) aufweist, über welche die Reinigungsbahn (52) verläuft, wobei die Abstützstruktur (72) optional höhenverstellbar ist, wobei zum Beispiel in einer Reinigungsposition des Beschichters Abstützstruktur, Reinigungsbahn und Beschichter von einer gemeinsamen, imaginären, vertikalen Linie geschnitten werden.

9. 3D-Drucker (10) nach Anspruch 8, wobei die Abstützstruktur (72) ein Gleitelement (74) aufweist, an dem die Reinigungsbahn (52) abgestützt ist, und wobei das Gleitelement (74) aus einem elastischen Material gebildet ist und/oder wobei das Gleitelement (74) mit einer Federkraft beaufschlagt ist, welche das Gleitelement (74) gegen die Reinigungsbahn (52) und in der Folge die Reinigungsbahn (52) gegen den Ausgabebereich (36) drückt, wenn sich der Beschichter (30) in einer Reinigungsposition befindet.

10. 3D-Drucker (10) nach einem der vorangehenden Ansprüche, wobei die Beschichter-Reinigungsvorrichtung (50) eine Reinigungsmittel-Zuführvorrichtung (90) aufweist, die eingerichtet ist, um der Reinigungsbahn (52) ein Reinigungsmittel zuzuführen, wobei zum Beispiel die Reinigungsmittel-Zuführvorrichtung (90) eingerichtet ist, einen Abschnitt der Reinigungsbahn (52) mit Reinigungsmittel zu befeuchten und/oder zu infiltrieren, der in Bahnlängsrichtung gesehen vor oder in einem Kontaktbereich (110) angeordnet ist, an dem sich der Ausgabebereich (36) und die Reinigungsbahn (52) für ein Abwischen des Ausgabebereichs (36) mittels der Reinigungsbahn (52) kontaktieren.

11. 3D-Drucker (10) nach einem der vorangehenden Ansprüche,
wobei die Beschichter-Reinigungsvorrichtung (50) ein drehbares Aufrollelement (130), z.B. drehbare Aufrollwalze, aufweist, auf welches die Reinigungsbahn (52) (zum Beispiel ein verschmutzter/verbrauchter Abschnitt davon) aufrollbar/aufwickelbar ist, wobei das Aufrollelement (130) optional auswechselbar ist für ein Entnehmen der verschmutzten Reinigungsbahn (52) aus der Beschichter-Reinigungsvorrichtung (50) und/oder optional ein angetriebenes Aufrollelement ist, und/oder
wobei die Beschichter-Reinigungsvorrichtung (50) ein drehbares Abrollelement (132), z.B. drehbare Abrollwalze, aufweist, von welchem die Reinigungsbahn (52) (zum Beispiel ein frischer Abschnitt davon) abrollbar/abwickelbar ist, wobei das Abrollelement (132) optional auswechselbar ist für ein Nachfüllen eines weiteren Abrollelements, auf dem eine frische Reinigungsbahn (52) aufgewickelt ist, und/oder optional ein angetriebenes Abrollelement ist.

12. 3D-Drucker (10) nach einem der Ansprüche 7 bis 11, wobei die Beschichter-Reinigungsvorrichtung (50) einen Sensor (150) zum Ermitteln der Reinigungsmittelmenge aufweist, welche von der Reinigungsbahn (52) in einem Abschnitt davon aufgenommen ist.

13. 3D-Drucker (10) nach einem der vorangehenden Ansprüche, wobei die Beschichter-Reinigungsvorrichtung (50) eine Steuerung (170) aufweist, welche eingerichtet ist, um
die Relativbewegung zwischen Ausgabebereich (36) und Reinigungsbahn (52) für ein Abwischen des Ausgabebereichs (36) mittels der Reinigungsbahn (52), "Bewegungsmuster", und/oder
die Menge und/oder Art des von der Reinigungsmittel-Zuführvorrichtung (90) aus Anspruch 10 an die Reinigungsbahn zugeführten Reinigungsmittels und/oder
eine Höheneinstellung der Abstützstruktur aus Anspruch 8 und/oder die Federkraft aus Anspruch 9 und/oder eine Andrückkraft der Andrückvorrichtung aus Anspruch 1 und/oder
einen Antrieb des Aufrollelements (130) und/oder einen Antrieb des Abrollelements (132)
zu steuern, zum Beispiel variabel einzustellen, zum Beispiel in Abhängigkeit von einem Verschmutzungsgrad des Ausgabebereichs (36) und/oder einer seit der letzten Reinigung verstrichenen Zeitdauer und/oder einem beim 3D-Druck verwendeten Baumaterial und/oder einer beim 3D-Druck verwendeten Bindemittelkomponente und/oder einer von der Reinigungsbahn (52) aufgenommen Reinigungsmittelmenge.

14. 3D-Drucker (10) nach einem der vorangehenden Ansprüche, wobei die Beschichter-Reinigungsvorrichtung (50) eine Antriebsvorrichtung aufweist, die eingerichtet ist, um die Reinigungsbahn in Längsrichtung derselben zu bewegen, zum Beispiel an dem Ausgabebereich vorbei und/oder zum Beispiel zum Bereitstellen eines frischen und/oder befeuchteten und/oder infiltrierten Reinigungsbahnabschnitts für ein Abwischen des Ausgabebereichs (36) mittels der Reinigungsbahn (52).

15. Verfahren zum Reinigen eines Beschichters (30) von einem 3D-Drucker (10) mit einer Beschichter-Reinigungsvorrichtung (50), wobei der Beschichter (30) einen Behälter (32), der einen inneren Hohlraum (34) zur Aufnahme von partikelförmigem Baumaterial definiert, und einen Ausgabebereich (36) zum Ausgeben des partikelförmigen Baumaterials hat, und wobei die Beschichter-Reinigungsvorrichtung (50) eine Reinigungsbahn (52), welche zum Beispiel aus einem saugfähigen Material hergestellt ist und/oder endlich ausgebildet ist und/oder als Einweg-Bahn ausgebildet ist und/oder austauschbar ausgebildet ist, und eine Andrückvorrichtung (70) hat, welche eingerichtet ist, um einen Abschnitt der Reinigungsbahn (52) gegen den Ausgabebereich (36) zu drücken, wenn sich der Beschichter (30) in einer Reinigungsposition befindet, aufweisend:
in Kontakt bringen des Beschichters (30) mit der Reinigungsbahn (52) und
Ausführen einer Relativbewegung zwischen dem Beschichter (30) und der Reinigungsbahn (52) für ein Abwischen des Beschichters (30) mittels der Reinigungsbahn (52), zum Beispiel in einem befeuchteten Zustand der Reinigungsbahn und/oder durch Bewegen des Beschichters, zum Beispiel in einer Richtung quer zu dessen Längsrichtung.

## Claims

1. A 3D printer (10) having a coater (30) and a coater cleaning device (50),
the coater (30) comprising a container (32) defining an inner cavity (34) for receiving particulate construction material and an output region (36) for outputting the particulate construction material,
the coater cleaning device (50) comprising a cleaning web (52), and
the coater cleaning device (50) and the coater (30) being configured to move the output region (36) and/or the cleaning web (52) relative to each other for wiping the output region (36) by means of the cleaning web (52), and
**characterized in that** the coater cleaning device (50) comprises a pressing device (70) configured to press a portion of the cleaning web (52) against the output region (36) when the coater (30) is in a cleaning position.

2. The 3D printer (10) according to claim 1, wherein the cleaning web (52) is configured to be finite, having a first end and a second end, and/or as a disposable cleaning web and/or to be exchangeable.

3. The 3D printer (10) according to claim 1 or 2,
wherein the output region (36) comprises at least one elongate stroking/sweeping surface (40a, 40b) configured to stroke construction material output from the container (32), and
wherein the at least one stroking/sweeping surface (40a, 40b) is wiped by means of the cleaning web (52) for cleaning the same by the relative movement between the output region (36) and the cleaning web (52).

4. The 3D printer (10) according to claim 3, wherein in a plan view of the coater (30) from above, a longitudinal axis (L1a, L1b; x) of the at least one stroking/sweeping surface (40a, 40b) is disposed at an angle to a longitudinal axis (L2; y) of the cleaning web (52) when the coater (30) is in a cleaning position in which it is disposed above the coater cleaning device (50).

5. The 3D printer (10) according to claim 3 or 4, wherein the cleaning web (52) approaches the at least one stroking/sweeping surface (40a, 40b) from below in a cross-sectional view of the coater (30) in such a way that the longitudinal axis (L2) of the cleaning web (52) forms an acute (entrance) angle with the at least one stroking/sweeping surface (40a, 40b) when the coater (30) is in a cleaning position.

6. The 3D printer (10) according to any one of claims 3 to 5, wherein the cleaning web (52) has such an extension in the width direction (B) that in a plan view of the coater (30) from above and/or in a side view thereof the two longitudinal ends (40aa, 40ab, 40ba, 40bb) of the at least one stroking/sweeping surface (40a, 40b) do not extend beyond the cleaning web (52) when the coater (30) is in a cleaning position.

7. The 3D printer (10) according to any one of the preceding claims, wherein the cleaning web (52) is made of an absorbent material configured to absorb a liquid cleaning agent, for example of an absorbent textile such as an absorbent fabric or an absorbent nonwoven.

8. The 3D printer (10) according to any one of the preceding claims, wherein the pressing device (70) comprises a support structure (72) over which the cleaning web (52) extends, the support structure (72) being optionally height-adjustable, wherein, for example, in a cleaning position of the coater, the support structure, the cleaning web and the coater are cut by a common imaginary vertical line.

9. The 3D printer (10) according to claim 8, wherein the support structure (72) comprises a sliding element (74) on which the cleaning web (52) is supported, and wherein the sliding element (74) is made of an elastic material and/or wherein a spring force is applied to the sliding element (74), which spring force presses the sliding element (74) against the cleaning web (52) and, as a result, the cleaning web (52) against the output region (36) when the coater (30) is in a cleaning position.

10. The 3D printer (10) according to any one of the preceding claims, wherein the coater cleaning device (50) comprises a cleaning agent supply device (90) configured to supply a cleaning agent to the cleaning web (52), wherein, for example, the cleaning agent supply device (90) is configured to moisten and/or infiltrate a portion of the cleaning web (52) with cleaning agent, which portion, as viewed in the longitudinal direction of the web, is arranged in front of or in a contact region (110) at which the output region (36) and the cleaning web (52) contact one another for wiping off the output region (36) by means of the cleaning web (52).

11. The 3D printer (10) according to any one of the preceding claims,
wherein the coater cleaning device (50) comprises a rotatable roll-up element (130), e.g. a rotatable roll-up roller, onto which the cleaning web (52) (e.g. a dirty/consumed portion thereof) can be rolled/wound up, wherein the roll-up element (130) is optionally replaceable for removing the dirty cleaning web (52) from the coater cleaning device (50) and/or optionally is a driven roll-up element, and/or
wherein the coater cleaning device (50) comprises a rotatable roll-off element (132), e.g. a rotatable roll-off roller, from which the cleaning web (52) (e.g. a fresh portion thereof) can be rolled/wound off, wherein the roll-off element (132) is optionally exchangeable for refilling another roll-off element, on which a fresh cleaning web (52) is rolled up, and/or optionally is a driven roll-off element.

12. The 3D printer (10) according to any one of claims 7 to 11, wherein the coater cleaning device (50) comprises a sensor (150) for determining the amount of cleaning agent received by the cleaning web (52) in a portion thereof.

13. The 3D printer (10) according to any one of the preceding claims, wherein the coater cleaning device (50) comprises a controller (170) configured to
control, for example variably adjust, for example depending on a degree of contamination of the output region (36) and/or a period of time elapsed since the last cleaning and/or a construction material used in 3D printing and/or a binder component used in 3D printing and/or a quantity of cleaning agent absorbed by the cleaning web (52),
the relative movement between the output region (36) and the cleaning web (52) for wiping off the output region (36) by means of the cleaning web (52), "movement pattern", and/or
the quantity and/or type of cleaning agent supplied to the cleaning web from the cleaning agent supply device (90) of claim 10, and/or
a height adjustment of the support structure of claim 8 and/or the spring force of claim 9 and/or a pressing force of the pressing device of claim 1, and/or
a drive of the roll-up element (130) and/or a drive of the roll-off element (132).

14. The 3D printer (10) according to any one of the preceding claims, wherein the coater cleaning device (50) comprises a driving device configured to move the cleaning web in the longitudinal direction thereof, for example past the output region and/or for example for providing a fresh and/or moistened and/or infiltrated cleaning web portion for wiping the output region (36) by means of the cleaning web (52) .

15. A method for cleaning a coater (30) of a 3D printer (10) by means of a coater cleaning device (50), the coater (30) comprising a container (32) defining an inner cavity (34) for receiving particulate construction material and an output region (36) for outputting the particulate construction material, and the coater cleaning device (50) comprising a cleaning web (52) which is for example made of an absorbent material and/or is configured to be finite and/or is formed as a disposable web and/or is configured to be exchangeable, and having a pressing device (70) configured to press a portion of the cleaning web (52) against the output region (36) when the coater (30) is in a cleaning position, comprising:
bringing the coater (30) into contact with the cleaning web (52), and
performing a relative movement between the coater (30) and the cleaning web (52) for wiping the coater (30) by means of the cleaning web (52), for example in a moistened state of the cleaning web and/or by moving the coater, for example in a direction transverse to the longitudinal direction thereof.

## Revendications

1. Imprimante 3D (10) avec un applicateur (30) et un dispositif de nettoyage d'applicateur (50),
l'applicateur (30) comprenant un récipient (32) qui définit une cavité interne (34) pour le logement d'un matériau de construction particulaire et une zone de distribution (36) pour la distribution du matériau de construction particulaire,
le dispositif de nettoyage d'applicateur (50) comprenant une bande de nettoyage (52), et
le dispositif de nettoyage d'applicateur (50) et l'applicateur (30) étant configurés pour déplacer la zone de distribution (36) et/ou la bande de nettoyage (52) l'une par rapport à l'autre pour essuyer la zone de distribution (36) moyennant la bande de nettoyage (52), et
**caractérisée en ce que** le dispositif de nettoyage d'applicateur (50) comprend un dispositif de pression (70) configuré pour presser une partie de la bande de nettoyage (52) contre la zone de distribution (36) lorsque l'applicateur (30) est dans une position de nettoyage.

2. Imprimante 3D (10) selon la revendication 1, dans laquelle la bande de nettoyage (52) est conçue de manière à être finie, avec une première extrémité et une seconde extrémité, et/ou comme bande de nettoyage jetable et/ou remplaçable.

3. Imprimante 3D (10) selon la revendication 1 ou 2,
dans laquelle la zone de distribution (36) comprend au moins une surface d'enduction allongée (40a, 40b) conçue pour enduire le matériau de construction distribué en provenance du récipient (32), et
dans laquelle l'au moins une surface d'enduction (40a, 40b) est essuyée au moyen de la bande de nettoyage (52) pour le nettoyage de celle-ci par le mouvement relatif entre la zone de distribution (36) et la bande de nettoyage (52).

4. Imprimante 3D (10) selon la revendication 3, dans laquelle, dans une vue de dessus de l'applicateur (30), un axe longitudinal (L1a, L1b, x) de l'au moins une surface d'enduction (40a, 40b) est disposé sous un angle par rapport à un axe longitudinal (L2, y) de la bande de nettoyage (52), lorsque l'applicateur (30) est dans une position de nettoyage, dans laquelle il est disposé au-dessus du dispositif de nettoyage d'applicateur (50).

5. Imprimante 3D (10) selon la revendication 3 ou 4, dans laquelle la bande de nettoyage (52), dans une vue en coupe transversale de l'applicateur (30), s'approche de l'au moins une surface d'enduction (40a, 40b) par le bas de telle sorte que l'axe longitudinal (L2) de la bande de nettoyage (52) forme un angle (d'entrée) aigu avec l'au moins une surface d'enduction (40a, 40b) lorsque l'applicateur (30) est dans une position de nettoyage.

6. Imprimante 3D (10) selon l'une quelconque des revendications 3 à 5, dans laquelle la bande de nettoyage (52) présente une extension dans le sens de la largeur (B) telle que, dans une vue de dessus de l'applicateur (30) et/ou une vue latérale de celui-ci, les deux extrémités longitudinales (40aa, 40ab, 40ba, 40bb) de l'au moins une surface d'enduction (40a, 40b) ne dépassent pas de la bande de nettoyage (52) lorsque l'applicateur (30) est dans une position de nettoyage.

7. Imprimante 3D (10) selon l'une quelconque des revendications précédentes, dans laquelle la bande de nettoyage (52) est constituée d'un matériau absorbant conçu pour absorber un agent de nettoyage liquide, par exemple d'un textile absorbant tel qu'un tissu absorbant ou un non-tissé absorbant.

8. Imprimante 3D (10) selon l'une quelconque des revendications précédentes, dans laquelle le dispositif de pression (70) comprend une structure de support (72) sur laquelle passe la bande de nettoyage (52), la structure de support (72) étant éventuellement réglable en hauteur, où, par exemple dans une position de nettoyage de l'applicateur, la structure de support, la bande de nettoyage et l'applicateur sont coupées par une ligne verticale imaginaire commune.

9. Imprimante 3D (10) selon la revendication 8, dans laquelle la structure de support (72) comprend un élément coulissant (74) sur lequel s'appuie la bande de nettoyage (52), et dans laquelle l'élément coulissant (74) est constitué d'un matériau élastique et/ou dans laquelle une force élastique est appliquée à l'élément coulissant (74), qui presse l'élément coulissant (74) contre la bande de nettoyage (52) et, par conséquent, la bande de nettoyage (52) contre la zone de distribution (36), lorsque l'applicateur (30) est dans une position de nettoyage.

10. Imprimante 3D (10) selon l'une quelconque des revendications précédentes, dans laquelle le dispositif de nettoyage d'applicateur (50) comprend un dispositif d'alimentation en agent de nettoyage (90) configuré pour fournir un agent de nettoyage à la bande de nettoyage (52), où, par exemple, le dispositif d'alimentation en agent de nettoyage (90) est configuré pour mouiller et/ou infiltrer une partie de la bande de nettoyage (52) avec un agent de nettoyage, qui, lorsqu'elle est vue dans le sens longitudinal de la bande, est disposée devant ou dans une zone de contact (110) dans laquelle la zone de distribution (36) et la bande de nettoyage (52) se contactent l'une avec l'autre pour essuyer la zone de distribution (36) moyennant la bande de nettoyage (52).

11. Imprimante 3D (10) selon l'une quelconque des revendications précédentes,
dans laquelle le dispositif de nettoyage d'applicateur (50) comprend un élément d'enroulement rotatif (130), par exemple un rouleau d'enroulement rotatif, sur lequel la bande de nettoyage (52) (par exemple une partie sale/utilisée de celle-ci) peut être enroulée/bobinée, l'élément d'enroulement (130) étant optionnellement remplaçable pour enlever la bande de nettoyage sale (52) du dispositif de nettoyage d'applicateur (50) et/ou étant optionnellement un élément d'enroulement entraîné, et/ou
dans laquelle le dispositif de nettoyage d'applicateur (50) comprend un élément de déroulement rotatif (132), par exemple un rouleau de déroulement rotatif, duquel la bande de nettoyage (52) (par exemple une nouvelle partie de celle-ci) peut être déroulée/débobinée, l'élément de déroulement (132) étant optionnellement remplaçable pour remplir un autre élément de déroulement, sur lequel une nouvelle bande de nettoyage (52) est enroulée, et/ou est optionnellement un élément de déroulement entraîné.

12. Imprimante 3D (10) selon l'une quelconque des revendications 7 à 11, dans laquelle le dispositif de nettoyage d'applicateur (50) comprend un capteur (150) pour déterminer la quantité d'agent de nettoyage reçue par la bande de nettoyage (52) dans une partie de celle-ci.

13. Imprimante 3D (10) selon l'une quelconque des revendications précédentes, dans laquelle le dispositif de nettoyage d'applicateur (50) comprend un contrôleur (170) configuré pour
contrôler, par exemple ajuster de manière variable, par exemple en fonction d'un degré de contamination de la zone de distribution (36) et/ou d'une période de temps écoulée depuis le dernier nettoyage et/ou d'un matériau de construction utilisé dans l'impression 3D et/ou d'un composant de liant utilisé dans l'impression 3D et/ou d'une quantité d'agent de nettoyage absorbée par la bande de nettoyage (52),
le mouvement relatif entre la zone de distribution (36) et la bande de nettoyage (52) pour essuyer la zone de distribution (36) moyennant la bande de nettoyage (52), « schéma de mouvement », et/ou
la quantité et/ou le type d'agent de nettoyage fourni à la bande de nettoyage par le dispositif d'alimentation en agent de nettoyage (90) de la revendication 10, et/ou
un réglage en hauteur de la structure de support de la revendication 8 et/ou la force élastique de la revendication 9 et/ou une force de pression du dispositif de pression de la revendication 1, et/ou
un entraînement de l'élément d'enroulement (130) et/ou un entraînement de l'élément de déroulement (132).

14. Imprimante 3D (10) selon l'une quelconque des revendications précédentes, dans laquelle le dispositif de nettoyage d'applicateur (50) comprend un dispositif d'entraînement configuré pour déplacer la bande de nettoyage dans sa direction longitudinale, par exemple devant la zone de distribution et/ou par exemple pour fournir une partie de bande de nettoyage nouvelle et/ou mouillée et/ou infiltrée pour essuyer la zone de distribution (36) moyennant la bande de nettoyage (52).

15. Procédé de nettoyage d'un applicateur (30) d'une imprimante 3D (10) moyennant un dispositif de nettoyage d'applicateur (50), l'applicateur (30) comprenant un récipient (32) qui définit une cavité interne (34) pour le logement d'un matériau de construction particulaire, et une zone de distribution (36) pour la distribution du matériau de construction particulaire, et le dispositif de nettoyage d'applicateur (50) comprenant une bande de nettoyage (52) qui est par exemple constituée d'un matériau absorbant et/ou est conçue de manière finie et/ou est formée comme une bande jetable et/ou est conçue de manière remplaçable, et ayant un dispositif de pression (70) configuré pour presser une partie de la bande de nettoyage (52) contre la zone de distribution (36) lorsque l'applicateur (30) est dans une position de nettoyage, comprenant les étapes suivantes consistant à :
mettre en contact l'applicateur (30) avec la bande de nettoyage (52), et
effectuer un mouvement relatif entre l'applicateur (30) et la bande de nettoyage (52) pour essuyer l'applicateur (30) moyennant la bande de nettoyage (52), par exemple dans un état humide de la bande de nettoyage et/ou en déplaçant l'applicateur, par exemple dans une direction transversale à sa direction longitudinale.
